# EUROPÄISCHE PATENTANMELDUNG

(11) **EP 2 677 425 A1**
(43) Veröffentlichungstag der Anmeldung: **25.12.2013**
(21) Anmeldenummer: 13171709.2
(22) Anmeldetag: 12.06.2013
(51) Int. Cl.: G06F 9/455

(54) **Beschleunigungseinrichtung mit Unterstützung für virtuelle Maschinen**

(30) Priorität: 12.06.2012 DE 102012105068
(71) Anmelder: EADS Deutschland GmbH, 85521 Ottobrunn (DE)
(72) Erfinder: Müller, Kevin, 81825 München (DE); Münch, Daniel J., 80686 München (DE); Paulitsch, Michael, 85521 Ottobrunn (DE); Karray, Hassen, 80992 München (DE)
(74) Vertreter: Flügel Preissner Kastel Schober

(57) **Zusammenfassung**

Die Erfindung betrifft ein insbesondere für Avionik geeignetes Rechnersystem (10) mit einer Ressourcenverwaltungseinrichtung (12) zur Separierung einer Mehrzahl von virtuellen Maschinen (14), umfassend:
eine Beschleunigungseinrichtung (18), die einen Eingangspufferspeicher (20), einen Ausgangspufferspeicher (22) und eine Bearbeitungseinrichtung (24) aufweist.

## Beschreibung

Die Erfindung betrifft ein Rechnersystem. Insbesondere betrifft die Erfindung ein Rechnersystem für Anwendungen in der Luft- und Raumfahrt und mehr insbesondere ein Rechnersystem für ein Luftfahrzeug.

In ortsgebundenen Datenverarbeitungsanlagen, wie z.B. Unternehmensserversystemen für eine Unternehmensverwaltung werden seit einigen Jahren virtuelle Maschinen verwendet, beispielsweise um Hardware- oder Energiekosten zu sparen. Diese Effekte sind besonders deutlich, wenn jede der virtuellen Maschinen Aufgaben vergleichsweise geringen Umfanges zu erfüllen hat.

Oftmals übersteigt die Anzahl der virtuellen Maschinen, die in einem Rechnersystem vorhanden sind, die Anzahl der in dem Rechnersystem verfügbaren Verarbeitungskerne. Dadurch müssen die virtuellen Maschinen regelmäßig unterbrochen werden, um sich gegenseitig die Benutzung der vorhandenen Verarbeitungskerne zu gestatten. In Echtzeitanwendungen erhalten beispielsweise virtuelle Maschinen jeweils eine festgesetzte Zeitspanne, während der sie aktiv sind. Reihum wird dann jede der virtuellen Maschinen für diese festgesetzte Zeitspanne aktiviert. Dadurch ist deterministisch bestimmbar, wann die virtuellen Maschinen aktiv sind.

Sind sehr viele virtuelle Maschinen vorhanden, so kann der zeitliche Abstand zwischen zwei aufeinanderfolgenden Aktivierungen derselben virtuellen Maschine sehr groß werden.

Anwendungen in der Luft- und Raumfahrt stellen erhöhte Anforderungen an die Sicherheit und die Verfügbarkeit von Rechnersystemen. Insbesondere wenn Rechnersysteme für flugrelevante Aufgaben eingesetzt werden, muss die unbedingte Verfügbarkeit gewährleistet werden. Generell müssen Rechnersysteme für Luftfahrtanwendungen besonders zugelassen werden.

In der Passagierluftfahrt werden immer mehr Anwendungen auch im Gebiet der Kommunikation und Unterhaltung der Passagiere erwünscht, wie z.B. Zugang zum Internet, Computerspiele oder Computeranimationen, Auswahl und Abspielen von immer komplexeren Audio- und Video-Dateien usw. Unterschiedliche Anwendungen unterschiedlicher Benutzerkreise und unterschiedlicher Personen machen außerdem die Rechteverwaltung komplexer. Werden für die unterschiedlichen Anwendungen jedoch unterschiedliche zertifizierte Rechner eingesetzt, so erhöht dies Gewicht und Energieaufwand, was wiederum für Luftfahrtanwendungen höchst unerwünscht ist.

Die Erfindung zielt darauf ab, Aufgaben in einem gewichts- und energieoptimierten Rechnersystem schneller abarbeiten zu können.

Vorzugsweise sollen virtuelle Maschinen zur Lösung von Aufgaben einsetzbar sein, wobei die Aktivierung der virtuellen Maschinen weiterhin deterministisch bestimmbar sein soll.

Mehr vorzugsweise soll ein für Luftfahrtanwendungen geeignetes und mit vernünftigem Aufwand zeritifizierbares Rechnersystem geschaffen werden, das besonders komplexe Aufgaben mit hoher Sicherheit und Verfügbarkeit schnell erfüllen kann.

Die Erfindung schlägt ein Rechnersystem mit den Merkmalen des Anspruchs 1 vor. Vorteilhafte Ausgestaltungen der Erfindung sind Gegenstand der Unteransprüche. Bevorzugte Einsatzgebiete und Verwendungen sind Gegenstand der Nebenansprüche.

Die Erfindung schafft ein Rechnersystem mit einer Ressourcenverwaltungseinrichtung zur Separierung einer Mehrzahl von virtuellen Maschinen und einer Beschleunigungseinrichtung, die einen Eingangspufferspeicher, einen Ausgangspufferspeicher und eine Bearbeitungseinrichtung aufweist.

Es ist bevorzugt, dass der Eingangspufferspeicher und der Ausgangspufferspeicher jeweils Pufferspeicher aufweisen, die jeweils einer virtuellen Maschine zugeordnet sind, wobei durch die Ressourcenverwaltungseinrichtung ein Weiterleitungsbereich gebildet wird, welcher einen Zugang der virtuellen Maschine zu dem ihr zugeordneten Pufferspeicher erlaubt.

Es ist bevorzugt, dass die Beschleunigungseinrichtung mittels eines Steuerungssignals steuerbar ist, das von einem Umschalter des Eingangspufferspeichers auswertbar ist, wobei der Umschalter jeweils zur Auswahl eines der Pufferspeichers zur Verbindung mit der Bearbeitungseinrichtung ausgebildet ist.

Es ist bevorzugt, dass der Ausgangspufferspeicher einen Umschalter aufweist, der von der Bearbeitungseinrichtung mittels eines Steuerungssignals zur Verbindung eines der Pufferspeicher mit der Bearbeitungseinrichtung steuerbar ist.

Es ist bevorzugt, dass die Bearbeitungseinrichtung zur Überwachung und/oder Filterung und/oder Steuerung von Datenkommunikation zwischen den virtuellen Maschinen und/oder mit einer externen Kommunikationseinrichtung ausgebildet ist.

Es ist bevorzugt, dass die Bearbeitungseinrichtung zur Verarbeitung von Bilddaten ausgebildet ist.

Gemäß eines weiteren Aspekts der Erfindung wird ein Luftfahrzeug mit einem Rechnersystem gemäß einer Ausgestaltung der Erfindung vorgeschlagen.

Gemäß eines Aspekts schafft die Erfindung selbst-virtualisierende oder virtualisierte Hardware-Beschleuniger oder selbst-virtualisierende oder virtualisierte Koprozessoren.

Ein Beispiel hierfür wäre ein hardware-beschleunigtes virtualisiertes Sicherheitsgateway.

Input-Output-Virtualisierung (IO-Virtualisierung) wird heutzutage bereits bei einigen auf dem Markt erhältlichen Netzwerk-Adaptern angewandt, wobei die Virtualisierung jedoch allein als Software implementiert ist. Gemäß eines besonders bevorzugten Aspekts der Erfindung wird eine Hardware-Beschleunigung mit IO-Virtualisierung mit Hardware-Unterstützung kombiniert, wobei vorzugsweise darüber hinaus die IO-Virtualisierung komplett in Hardware als selbst-virtualisierender oder virtualisierter Hardware-Beschleuniger oder selbst-virtualisierender oder virtualisierter Hardware-Koprozessor ausgeführt ist.

Ein Verfahren zum Aufbauen und/oder Betreiben eines Rechnersystems mit gewünschter System-Funktionalität ist insbesondere gekennzeichnet durch: Aufteilen der System-Funktionalität in kleinere Komponenten, Trennen dieser Komponenten durch Aufteilen von Ressourcen in virtuelle Maschinen-Umgebungen und Einsetzen von gemeinsam sicher nutzbaren Hardware-Beschleunigern oder Hardware-Koprozessoren.

Mehrere kleinere Komponenten lassen sich sicher und einfacher nachprüfen und damit, z.B. für Luftfahrtanwendungen, zulassen. Aufgrund dieser Aufteilung ist somit die Eignung für derartige sicherheitsrelevante technische Gebiete wie Verkehrstechnik, Militärtechnik, Raumfahrttechnik oder für andere Gebiete, in denen Sicherheit von Leib und Leben oder von hohen Sachwerten von der Funktionalität des Rechnersystems abhängt, erhöht.

Es ist eine große Anzahl unterschiedlicher Beschleunigertypen einsetzbar. Ein anschauliches Ausführungsbeispiel, anhand dem vorzugsweise die nähere Beschreibung der beispielhaften Ausgestaltung der Erfindung erfolgt, wäre die Anwendung des Sicherheitsgateways, das den Datenfluss zwischen unterschiedlichen Sicherheits-Sphären steuert.

Im Gegensatz zu bisherigen Koprozessoren oder Hardware-Beschleunigern, die entweder gar keine Virtualisierung oder software-basierte Virtualisierung nutzen, schafft ein Ansatz gemäß einer bevorzugten Ausgestaltung der Erfindung eine Lösung mit einer hardwaregestützten IO-Virtualisierungs-Ebene und darüber hinaus einer eigenen Hardware-IO-Virtualisierungs-Ebene (selbst-virtualisierende Vorrichtung). Der Einsatz einer solchen Hardware-Virtualisierungs-Ebene nutzt die Beschleunigungseinrichtung oder den Koprozessor effizienter und erlaubt deren gemeinsame Nutzung durch unterschiedliche getrennte virtuelle Maschinen oder virtuelle Abteilungen in sicherer Weise, indem der Virtualisierungs-Überbau so klein wie möglich gehalten wird.

Die Erfindung wird nachfolgend anhand von Ausführungsbeispielen näher erläutert, die in den beigefügten Figuren schematisch dargestellt sind. Es zeigen im Einzelnen:
- Fig. 1: ein Rechnersystem mit einer ersten Ausführungsform der Beschleunigungseinrichtung;
- Fig. 2: ein Flussdiagramm für eine einzelne Interaktion der Beschleunigungseinrichtung mit den weiteren Komponenten des Rechnersystems;
- Fig. 3: eine Blockdarstellung einer System-Architektur mit einem Separation Kernel einer weiteren Ausführungsform;
- Fig. 4: eine schematische Darstellung eines Hardware-Virtualisierers eines virtualisierten Sicherheitsgateways als Ausführungsbeispiel;
- Fig. 5: eine schematische Darstellung der Hardware-Architektur mit Hardware-Software-Aufteilung;
- Fig. 6: eine schematische Darstellung zur Übersicht über Luftfahrzeug-Sicherheits-Bereiche als Anwendungsbeispiel für das Rechnersystem;
- Fig. 7: ein Beispiel für eine System-Architektur mit zwei Anwendungsbereichen (Domain A und Domain B), optional einem Management-Bereich (Management Domain; der Treiber für das PF-Interface kann z.B. auch in der Separation-Kernel-Ebene liegen), der Steuerungsbene und der Hardwareebene einschließlich der Selbst-Virtualisierungs-Funktion, z.B. ein Sicherheitsgateway;
- Fig. 8: eine schematische Darstellung der Hardware-Virtualisierungs-Architektur;
- Fig. 9: eine vergleichende zeitliche Darstellung der Ausführungsperioden von Abteilen oder Partitionen auf dem Host-System;
- Fig. 10: eine schematische Darstellung eines vereinfachten Verteilungs-Protokolls (Simplified Distribution Protocol - SDP);
- Fig. 11: ein Flussdiagramm für eine Sicherheitsgateway-Prozedur als konkretes Ausführungsbeispiel für das Diagramm von Fig. 2;
- Fig. 12: eine schematische Darstellung einer Hardware-Architektur für ein Ausführungsbeispiel eines Sicherheitsgateway;
- Fig. 13: eine schematische Darstellung einer Echtzeit-Objekt-Erkennung als weiteres mögliches Ausführungsbeispiel;
- Fig. 14: eine schematische Darstellung eines adaptierbaren IO-Interfaces, das durch mehrfache IO-Module gemeinsam nutzbar ist, als weiteres Ausführungsbeispiel.

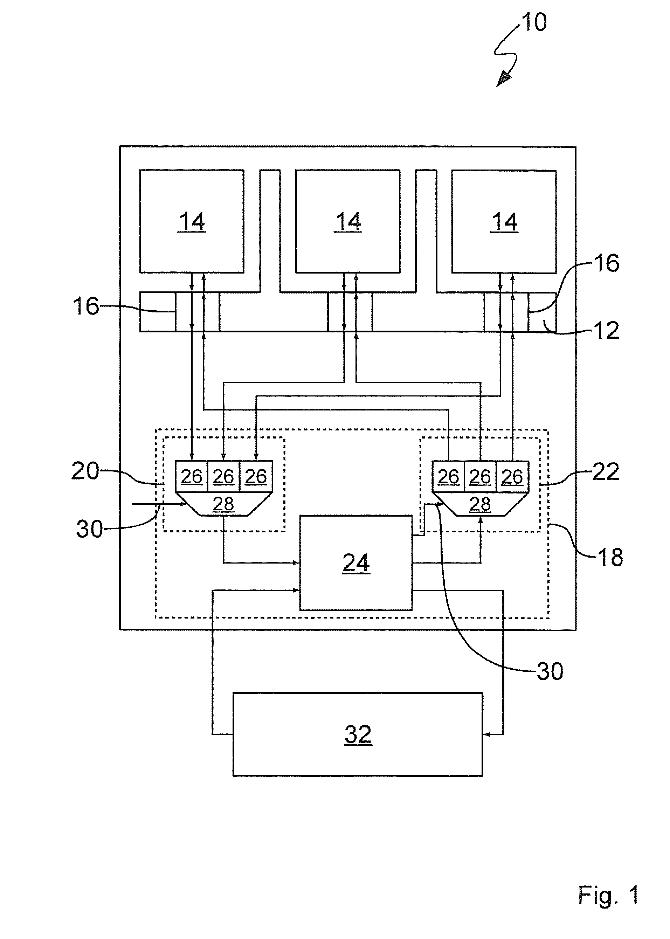

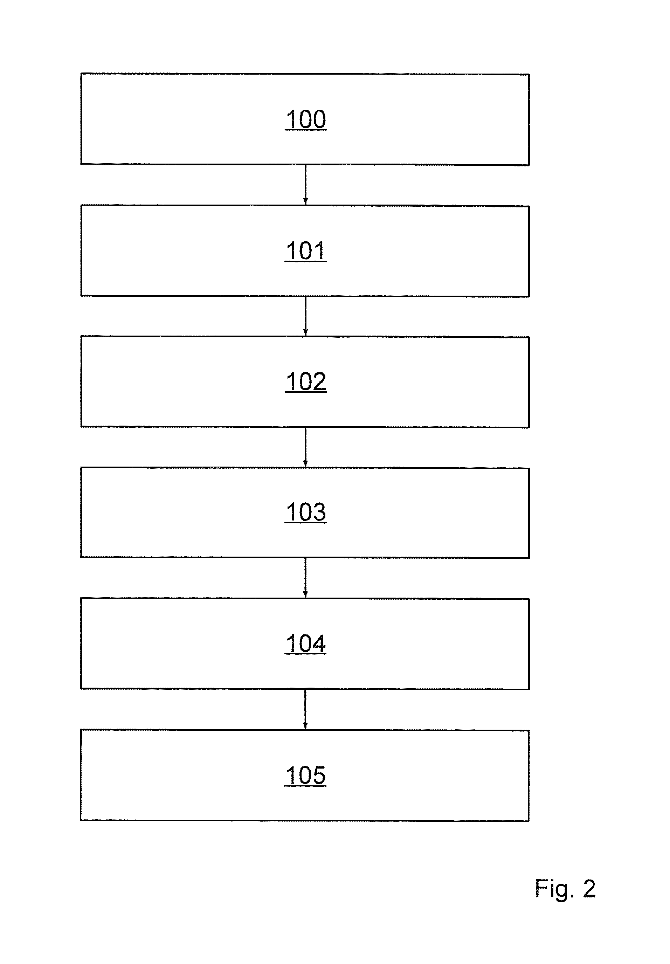

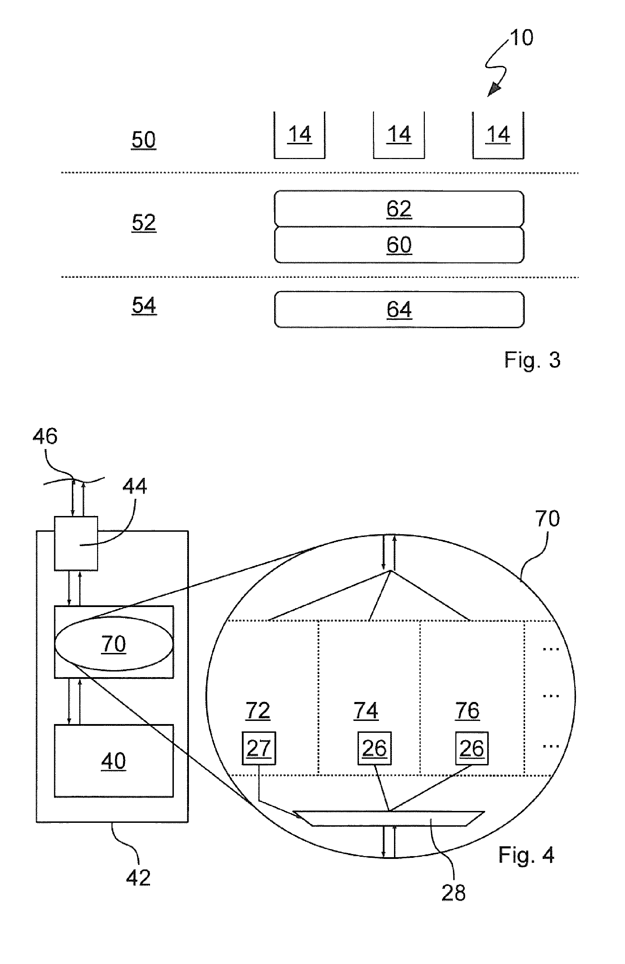

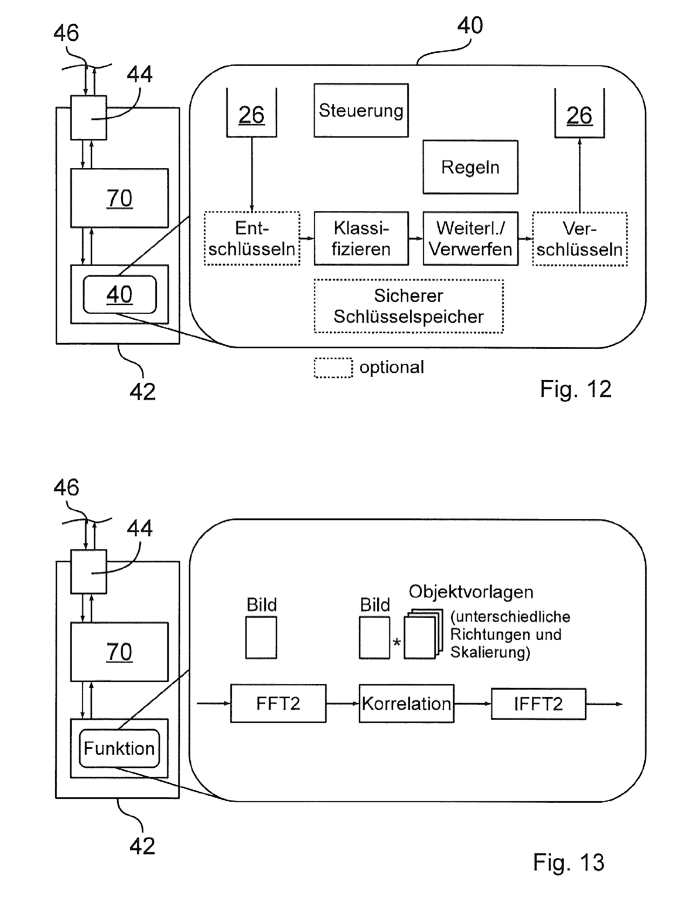

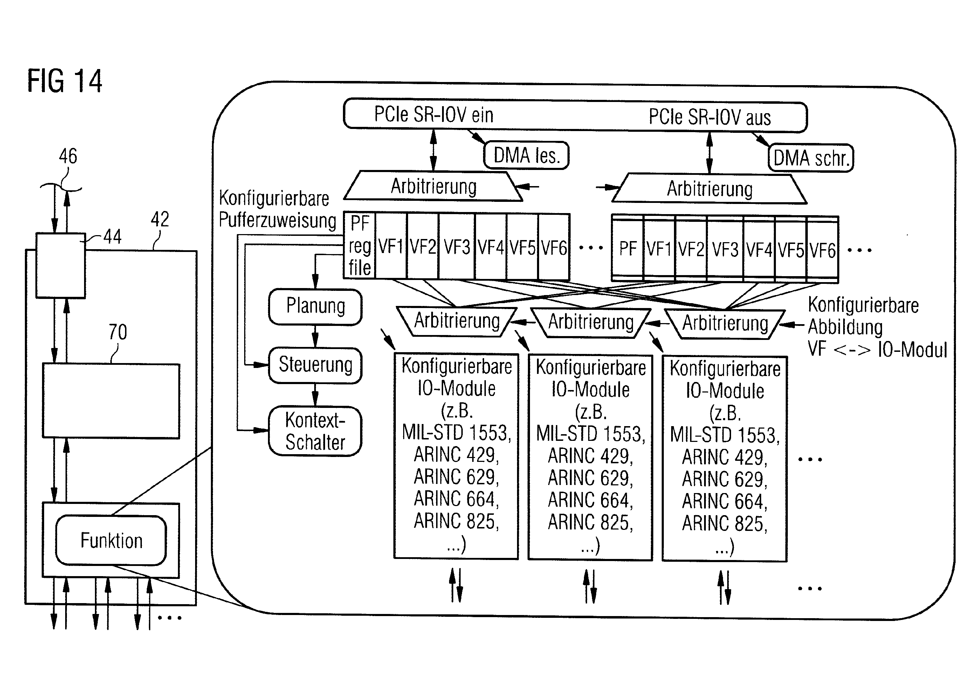

Im Folgenden wird zunächst ein allgemeines Ausführungsbeispiel eines Rechnersystems und dessen allgemeiner Aufbau als vorteilhafte Ausgestaltung der Erfindung anhand der Fig. 1 und 2 näher erläutert. Daraufhin wird ein konkreter möglicher Anwendungsfall eines solchen Rechnersystems detailliert anhand eines Ausführungsbeispiels als Sicherheitsgateway unter Bezug auf die Fig. 3 bis 12 näher erläutert. Anschließend werden zwei weitere mögliche Anwendungsfälle anhand zweier weiterer möglicher Ausführungsbeispiele unter Bezug auf die Fig. 13 und 14 näher erläutert.

Das in Fig. 1 gezeigte Rechnersystem 10 weist eine Verarbeitungseinrichtung mit wenigstens einem Verarbeitungskern (Prozessorkern) auf, der zur Abarbeitung von Befehlen aus einer Arbeitsspeichereinrichtung ausgebildet ist. Eine Mehrzahl von Befehlen, durch welche die Verarbeitungseinrichtung oder der Verarbeitungskern einen bestimmten Ablauf ausführt, bildet ein Programm. Während ein solches Programm abgearbeitet wird, ist es dem Verarbeitungskern, von dem es abgearbeitet wird, als Prozess (englisch auch thread oder process) bekannt.

Die Verarbeitungseinrichtung weist eine Ressourcenverwaltungseinrichtung 12 auf, welche in dem Rechnersystem 10 vorhandene Ressourcen, beispielsweise die Arbeitsspeichereinrichtung oder Peripheriegeräte, verwaltet und zuordnet.

Die Verarbeitungseinrichtung ist dazu ausgebildet, mehrere Prozesse parallel ausführen zu können. Dies kann dadurch erreicht werden, dass die Verarbeitungseinrichtung mehrere Verarbeitungskerne aufweist, die jeweils einen Prozess ausführen. Des Weiteren kann ein einzelner Verarbeitungskern so ausgebildet sein, dass er zur abwechselnden Ausführung verschiedener Prozesse geeignet ist (Multitasking). Dazu werden die einzelnen Prozesse in gewissen Abständen unterbrochen und im Anschluss daran ein anderer Prozess ausgeführt. Ebenso ist es möglich, beide Ansätze (mehrere Kerne und abwechselnde Nutzung der Kerne) gleichzeitig zu verfolgen.

Die Regeln, nach denen die Prozesse unterbrochen werden, hängen von der beabsichtigten Verwendung des Rechnersystems 10 ab. Für zeitkritische Anwendungen kann es nötig sein, dass Prozesse auf von Peripheriegeräten gemeldete Nachrichten innerhalb einer bestimmten Zeit reagieren müssen. Sind mehrere Prozesse vorhanden, die eine solche Bedingung erfüllen müssen, so werden den existierenden Prozessen feste Zeitschlitze zugewiesen. Jeder Prozess erhält somit eine festgelegte Abarbeitungszeit, während der er abgearbeitet wird, unabhängig davon, ob der Prozess zu diesem Zeitpunkt einen Zeitschlitz benötigt. Diese Vorgehensweise erlaubt es, bestimmte Verhaltensweisen des Rechnersystems 10 verlässlich festzuschreiben, beispielsweise Echtzeitbedingungen. So ist beispielsweise davon auszugehen, dass, wenn drei Prozesse vorhanden sind und jeder dieser Prozesse der Reihe nach einen Zeitschlitz von 10 ms erhält (Ausführungszyklus), jeder Prozess wenigstens einmal in 30 ms abgearbeitet wird. Dies hat zur Folge, dass jeder Prozess Nachrichten innerhalb von 30 ms erhalten kann.

Bei jedem Umschalten zwischen Prozessen ist es notwendig, einen Zustand des Verarbeitungskerns, der den Prozess abarbeitet, zu speichern, beispielsweise in der Arbeitsspeichereinrichtung. Ein solcher Zustand eines Verarbeitungskerns wird auch Kontext genannt. Der Kontext kann beispielsweise in der Arbeitsspeichereinrichtung oder einem separaten Kontextspeicher abgespeichert werden.

Die Ressourcenverwaltungseinrichtung 12 weist einzelnen Prozessen Ressourcen nicht nur zu, sondern prüft auch, dass die Prozesse nur auf die Ressourcen zugreifen, die ihnen zugewiesenen sind. Darüber hinaus kann die Ressourcenverwaltungseinrichtung 12 den Prozessen Ressourcen vorspiegeln, die in der Realität nicht existieren. Sofern ein Prozess versucht, auf derartige virtuelle Ressourcen zuzugreifen, wird der Zugriff von der Ressourcenverwaltungseinrichtung 12 an die korrekte real existierende Ressource weitergeleitet. Diese Funktion der Ressourcenverwaltungseinrichtung 12 ist, bezogen auf die Arbeitsspeichereinrichtung, auch unter dem englischen Namen "memory management unit" (MMU) bekannt. Die Ressourcenverwaltungseinrichtung 12 kann eine ähnliche Funktion im Verhältnis zwischen Peripheriegeräten und der Arbeitsspeichereinrichtung ausführen. Dies ist unter dem englischen Namen "input/output memory management unit" (IOMMU) bekannt.

Die Ressourcenverwaltungseinrichtung 12 ist dazu ausgebildet, die Verarbeitungseinrichtung in mehrere virtuelle Maschinen 14 aufzuteilen. Prozesse, die innerhalb einer derartigen virtuellen Maschine 14 ausgeführt werden, können mit Prozessen in anderen virtuellen Maschinen 14 nicht unmittelbar interagieren. Die Ressourcenverwaltungseinrichtung 12 schottet die virtuellen Maschinen 14 gegeneinander so ab, dass diese jeweils nur die ihnen zugewiesenen Ressourcen verwenden können. Die Umgebung der Prozesse, die jeweils in einer virtuellen Maschine 14 ausgeführt werden, entspricht der Umgebung, die ein Prozess vorfände, würde er in einem dedizierten Verarbeitungskern ausgeführt.

Die Ressourcenverwaltungseinrichtung 12 wird z.B. durch eine Kombination aus Hardware und Software realisiert. Die Software dient dabei weitestgehend der Konfiguration der Hardware und als Schnittstelle zwischen ausgeführten Prozessen und der Hardware. Die Funktionen der MMU und der IOMMU werden z.B. in Hardware realisiert und durch die Software konfiguriert. Die Hardware weist beispielsweise Tabellen auf, in denen abgespeichert ist, auf welche Bereiche der Arbeitsspeichereinrichtung ein Prozess zugreifen darf. Diese Tabellen werden von der Software befüllt. Somit kann die Software der Ressourcenverwaltungseinrichtung 12 beim Erstellen einer virtuellen Maschine beispielsweise die Hardware anweisen, bestimmte Zugriffe von Prozessen, die dieser virtuellen Maschine 14 zugeordnet sind, auf Speicherbereiche oder Peripheriegeräte ohne weitere Kontrolle zu erlauben. Diese Funktion wird als "virtual machine manager" oder "virtual machine monitor" (VMM), Hypervisor oder "separation kernel" (SK) bezeichnet.

Die Hardware der Ressourcenverwaltungseinrichtung 12 bildet aufgrund der Anweisungen einen Weiterleitungsbereich 16 und reicht im Anschluss daran alle Zugriffe durch Prozesse, die dieser virtuellen Maschine 14 zugeordnet sind, unverändert und ohne Prüfung an die Arbeitsspeichereinrichtung oder Peripheriegeräte weiter. Da die Hardware keine weitere Prüfung oder Veränderung durchführen muss, sind diese Zugriffe nahe zu genauso schnell, wie sie ohne die Ressourcenverwaltungseinrichtung 12 wären.

Die Aufteilung eines Rechnersystems in mehrere virtuelle Maschinen 14 kann dazu dienen, komplexe Gesamtsysteme in kleinere, leichter beherrschbare, Einzelsysteme zu teilen, ohne zusätzliche Verarbeitungseinrichtungen vorsehen zu müssen. Darüber hinaus können durch virtuelle Maschinen 14 einzelne Funktionalitäten einfacher hinzugefügt oder entfernt werden. So ist es denkbar, eine Kommunikationssicherungseinrichtung als virtuelle Maschine 14 vorzusehen, welche die Kommunikation der virtuellen Maschinen 14 untereinander und mit der Außenwelt überprüft und steuert (beispielsweise als Firewall). Ebenso können Dienste zur Bilddatenverarbeitung als separate virtuelle Maschine 14 vorgehalten werden, die von den anderen virtuellen Maschinen 14 verwendet werden kann.

In bestimmten Szenarien, beispielsweise wenn die oben genannten Echtzeitbedingungen erfüllt werden sollen, hat dies jedoch zur Folge, dass durch die zusätzliche virtuelle Maschine 14 die notwendigen Echtzeitbedingungen nicht mehr garantiert werden können, beispielsweise weil keine zusätzlichen Zeitschlitze mehr in einem Ausführungszyklus untergebracht werden können. In Flugzeugelektronik kann jedoch die Einhaltung von Echtzeitbedingungen sicherheitsrelevant sein; deswegen haben die auf anderen Anwendungsgebieten (z.B. im Desktop- oder Serverumfeld) entwickelten bisher bekannten Virtualisierungstechniken keine Verbreitung in der Flugzeugelektronik oder der sonstigen Luftfahrzeugelektronik gefunden.

In dem vorliegenden Ausführungsbeispiel ist eine Beschleunigungseinrichtung 18 zur Beschleunigung von Datenverarbeitungsvorgängen vorgesehen, welche Dienste für die virtuellen Maschinen 14 bereitstellt. Die Beschleunigungseinrichtung 18 ist von der Verarbeitungseinrichtung getrennt in Hardware ausgebildet (als Koprozessor oder mittels einer Buseinrichtung angebundenen Baugruppe) und weist einen Eingangspufferspeicher 20 und einen Ausgangspufferspeicher 22 sowie eine Bearbeitungseinrichtung 24 auf. Der Eingangspufferspeicher 20 und der Ausgangspufferspeicher 22 weisen jeweils Pufferspeichereinrichtungen 26 auf, die jeweils einer virtuellen Maschine 14 zugeordnet sind. Die Ressourcenverwaltungseinrichtung 12 stellt für die Verbindung zwischen den virtuellen Maschinen und den Pufferspeichereinrichtungen 26 jeweils einen Weiterleitungsbereich 16 zur Verfügung.

Der Eingangspufferspeicher 20 und der Ausgangspufferspeicher 22 weisen darüber hinaus jeweils einen Umschalter 28 auf. Der Umschalter 28 wird mittels eines Steuerungssignals 30 eingestellt, so dass die Bearbeitungseinrichtung 24 jeweils mit einer der Pufferspeichereinrichtungen 26 verbunden wird. Für die Steuerung des Umschalters 28 des Eingangspufferspeichers 20 kann die Ressourcenverwaltungseinrichtung 12 oder eine separate Steuereinrichtung verantwortlich sein, die dadurch Einfluss darauf nimmt, welche Anfragen von welchen virtuellen Maschinen 14 bearbeitet werden. Der Umschalter 28 des Ausgangspufferspeichers 22 wird von der Bearbeitungseinrichtung 24 gesteuert. Die Bearbeitungseinrichtung 24 legt dadurch fest, an welche der virtuellen Maschinen 14 das Ergebnis ihrer Bearbeitung übermittelt wird.

Bei der vorliegenden Ausführungsform ist an der Bearbeitungseinrichtung 24 zusätzlich eine Kommunikationseinrichtung 32 zur Kommunikation mit der Außenwelt vorgesehen.

Eine erste Ausführungsform der Beschleunigungseinrichtung 18 dient der Vermittlung, Steuerung und Überwachung von Datenkommunikation zwischen den virtuellen Maschinen 14 und der Kommunikationseinrichtung 32 und damit der Außenwelt. Der Ablauf einer solchen Kommunikation ist schematisch in Fig. 2 dargestellt.

Wenn eine virtuelle Maschine 14 eine Kommunikation tätigen will, dann legt sie in einem ersten Schritt 100 ein entsprechendes Datenpaket, das unter anderem Daten über den Absender und den Empfänger enthält, in der Pufferspeichereinrichtung 26 ab, was durch die Weiterleitungseinrichtung 16 von der Ressourcenverwaltungseinrichtung 12 erlaubt wird. Die Pufferspeichereinrichtung 26 puffert in einem zweiten Schritt 101 das Datenpaket und fügt es einer Liste oder Warteschlange abzuarbeitender Datenpakete hinzu.

In einem dritten Schritt 102 wird die Beschleunigungseinrichtung 18 durch das Steuersignal 30 dieser virtuellen Maschine 14 zugewiesen. Die Bearbeitungseinrichtung 18 bearbeitet das Datenpaket in einem vierten Schritt 103.

In einem fünften Schritt 104 wählt die Bearbeitungseinrichtung 18 mittels des Steuersignals 30 eine Pufferspeichereinrichtung 26 aus, in welcher das Ergebnis der Bearbeitung des Datenpakets abgelegt wird und übermittelt das Datenpaket an den Ausgangspufferspeicher 22. Sofern das Ergebnis der Bearbeitung an mehrere virtuelle Maschinen 14 und somit an mehrere Pufferspeichereinrichtungen 26 übermittelt werden soll, wählt die Bearbeitungseinrichtung 18 weitere Pufferspeichereinrichtungen 26 aus und übermittelt das entsprechende Datenpaket.

In einem sechsten Schritt 105 wird der Inhalt der Pufferspeichereinrichtungen 26 an die ihnen zugeordneten virtuellen Maschinen 14 übertragen. Diese Übertragung geschieht mittels eines DMA ("direct memory access")-Verfahrens. Dieses Verfahren wird von der Weiterleitungseinrichtung 16 und somit von der Ressourcenverwaltungseinrichtung 12 in deren Funktion als IOMMU gesteuert und überwacht.

Das Rechnersystem 10 erlaubt es, bestimmte Aufgaben asynchron von der Bearbeitungseinrichtung 24 durchführen zu lassen. Dadurch ist es nicht mehr notwendig, dass die virtuellen Maschinen 14 auf die Abarbeitung dieser Aufgaben warten müssen oder die Ausführung der virtuellen Maschinen 14 unterbrochen werden muss, um den Verarbeitungskern für die Durchführung dieser Aufgaben freizumachen. Da die Bearbeitungseinrichtung für jede der virtuellen Maschinen 14 einen separaten Kommunikationsbereich in Form der Pufferspeichereinrichtungen 26 bereitstellt, bleibt die Separierung der virtuellen Maschinen 14 erhalten.

Im Folgenden wird nun anhand der Darstellung der Fig. 3 bis 12 ein konkreter Anwendungsfall und ein entsprechend detaillierteres Ausführungsbeispiel des Rechnersystems 10 näher erläutert.

Es werden insbesondere selbst-virtualisierende oder virtualisierte Hardware-Beschleuniger und Koprozessoren als Beschleunigereinrichtung 18 am Beispiel eines hardwarebeschleunigten virtualisierten Sicherheitsgateways 40 näher erläutert.

Eine bevorzugte Anwendung liegt auf dem Gebiet der IT-Sicherheit (Prozesssicherheit, Verfügbarkeit und/oder Datensicherheit - insbesondere hinsichtlich sicherem und korrektem Zugriff und Erhalt der Daten) und insbesondere der IT-Sicherheit bei gemischt-kritischen Anwendungen, die unterschiedliche Anforderungen hinsichtlich Sicherheit und Verfügbarkeit haben. Die Erfindung ist insbesondere geeignet für hinsichtlich Sicherheit, Verfügbarkeit und Datensicherheit kritische Echtzeit-Systeme (insbesondere Embedded-Systeme) oder auch für hinsichtlich Sicherheit, Verfügbarkeit und Datensicherheit kritische Nicht-Echtzeitsysteme (insbesondere Embedded-Systeme). Ganz besonders trifft dies auf den Anwendungsbereich der Luftfahrt zu (z.B. onboard oder am Boden oder als Schnittstelle Boden-Board).

Im Folgenden werden einige hier insbesondere verwendete Begriffe definiert. Aufgrund der hier üblichen Fachsprache werden auch einige aus dem Englischen stammende Begriffe verwendet, deren Bedeutung dem hier zuständigen Fachmann, auch dem deutschsprachigen Fachmann, ohne weiteres geläufig ist.

Als "Gateway" werden insbesondere Protokoll-Umwandler (protocol converter), z.B. Umwandler von IP auf IPX bezeichnet.

Unter "Sicherheitsgateway" oder auch "Security Gateway" werden insbesondere Firewalls verstanden:
Unter "Firewalls" (aus dem Englischen für "Brandmauer") werden insbesondere allgemein System-Komponenten verstanden, die in Software und/oder Hardware realisiert sind und die den Informationsfluss zwischen Sicherheitsbereichen (security domains) in Übereinstimmung mit den jeweils gültigen System-Sicherheits-Grundsätzen (security policy) steuern und begrenzen. Es werden z.B. drei unterschiedlichen Arten von Firewalls unterschieden:
   - Paketfilter (packet filter) untersuchen die Kopf-Informationen (Header-Informationen) eines Daten-Pakets, z.B. IP-Adresse und Port;
   - zustandsbehaftete Paketfilter (stateful packet filter) sind Paketfilter, deren Regeln dynamisch konkretisiert werden, um den Zugriff oder Zugang genauer auf eine aufgebaute Verbindung zu begrenzen; und/oder
   - Anwendungsebenen-Gateway oder Proxy-Firewall (application level gateway/ proxy firewall): Diese analysieren zusätzlich zu der Quelle, dem Ziel, dem Dienst-Typ auch die Daten an sich. Um die Anwendungsebene analysieren zu können, nimmt das Gateway die Verbindung auf und richtet die tatsächliche Verbindung anstelle des Clients ein, d.h. es handelt wie ein Proxy.

"Partition" ist ein Ausdruck, der hauptsächlich in Echtzeitsystemen verwendet wird, um eine in sich abgeschlossene oder eigenständige Laufzeit-Umgebung mit strikter Trennung von Speicher-Ressourcen, CPU-Zeit-Ressourcen und IO-Ressourcen (IO-Input/Output, d.h. Eingang/Ausgang) zu beschreiben.

Ein Sicherheitsbereich (auch Security Domain) enthält und verarbeitet Daten, die in der gleichen Sicherheitsstufe klassifiziert sind. Ein Sicherheitsbereich ist eine Zusammenstellung von einer oder mehreren Partitionen.

Als "virtuelle Maschine" (auch kurz VM) wird insbesondere ein isoliertes Gastsystem innerhalb eines Host-Rechnersystems verstanden.

Unter "Virtuelle-Maschinen-Monitor" oder "Virtual Machine Monitor" (im Folgenden kurz VMM) oder "Hypervisor" (im Folgenden auch kurz "Hyp") wird insbesondere eine Systemebene verstanden, die durch Ressourcen - wie Hardware und Zeit-definierte virtuelle und eingeschlossene Prozessumgebungen für Gastsysteme bereitstellt. Hierdurch können mehrfache Instanzen einer Vielfalt von Untersystemen (virtualisierte) Hardware-Ressourcen untereinander teilen, d.h. gemeinsam nutzen. Das Verwalten der Ausführung der Gast-/Untersysteme ist eine Hauptaufgabe des VMM (dieser wird daher auch zuweilen als "Virtual Machine Manager" bezeichnet).

Unter "Mikrokern" (Betriebssystem) [auch Engl.: micro kernel (operating system)] wird insbesondere ein Minimum an Software verstanden, die zur Implementierung eines Betriebssystems (im Folgenden auch kurz OS für Operating System) benötigt wird. Dazu gehören insbesondere eine Speicherverwaltung (memory management), eine Prozessverwaltung (thread management) und eine Zwischen-Prozess-Kommunikation (inter-process communication, im Folgenden auch kurz IPC). Alle zusätzlichen typischen Dienste eines Betriebssystems laufen als normale Prozesse (wie z.B. Gerätetreiber, Protokollstapel (protocol stacks), Dateisysteme (file systems)) außerhalb des Mikrokerns.

Unter "Separation Kernel" (Betriebssystem), auch kurz SK genannt, wird insbesondere eine Art Mikrokern verstanden, der für einen Schutz/eine Trennung (engl. separation)/eine Aufteilung (engl. partitioning) von Ressourcen, eine Steuerung des Informationsflusses zwischen Partitionen und/oder einen Prüfdienst sorgt.

Unter "virtueller Anwendung" (virtual appliance) wird insbesondere ein vorinstalliertes, vorkonfiguriertes Betriebssystem- und/oder Anwendungspaket verstanden, das auf einer virtualisierten Plattform bzw. in einer virtuellen Maschine zusamengestellt, angewandt, gewartet, aktualisiert und verwaltet wird.

Im Bereich der Luft- und Raumfahrt und insbesondere im Bereich der Luftfahrt gibt es ein immer dringenderes und vergrößertes Bedürfnis nach neuen und zusätzlichen IT-Diensten wie z.B. Passagier-Vernetzung, Auslagerung von Wartungsdaten zur Analyse oder Zur-Verfügung-Stellen von Flugsystem-Informationen. Dieser Trend verlangt nach einer ausgedehnten Konnektivität unter eingebetteten Luftfahrt-Untersystemen selbst und zwischen Bodensystemen und Avionik-Systemen am Luftfahrzeug. Zusammen mit dem Trend einer dichteren Integration von Funktionalitäten mit unterschiedlichen Sicherheits- und Verfügbarkeitskriterien auf einer einzelnen Rechnerplattform führt dies dazu, dass bisherige Systemarchitekturen nicht mehr den Erfordernissen hinsichtlich gleichzeitiger Gewährleistung von Datensicherheit und Verfügbarkeit der Rechnersysteme genügen. Die hier beschriebene Lösung wendet sich dem Erfordernis nach neuen Strategien, Architekturen und Infrastrukturen zu, die bessere Datensicherheit hinsichtlich Datenzugriff und Datenerhalt und bessere und höher verfügbare Aufteilung von Ressourcen bieten und somit eine höhere Ausnutzung von Rechnerressourcen bieten. Damit können mit geringeren Ressourcen (Hardware und Zeit) mehr Aufgaben sicherer bewältigt werden. Gerade im Luftfahrtbereich hat dies große Vorteile, auch hinsichtlich Gewicht und Energieverbrauch des Rechnersystems.

Hierzu wird der Ansatz verfolgt, dass die Systemfunktionalität in kleinere Komponenten aufgeteilt wird, die einfacher überprüfbar und insbesondere zertifizierbar sind. Diese Komponenten werden durch Aufteilen der Ressourcen in Umgebungen virtueller Maschinen getrennt. Weiter werden von den virtuellen Maschinen sicher gemeinsam nutzbare Hardware-Beschleuniger oder Koprozessoren eingesetzt.

Solche Hardware-Beschleuniger oder Koprozessoren können z.B. zur Signal- und Bildverarbeitung, z.B. als Codecs - wie H.264/MPEG2 - , zur Fehlerkorrektur, zur Kollisionserkennung oder für mathematische Prozesse (wie FFT, DCT, DWT) eingesetzt werden.

Ein zweites Anwendungsgebiet ist z.B. die Beschleunigung von Netzwerkanwendungen, z.B. Sicherheitsgateways, Firewalls, Paketfilter, Netzwerk-Überwachung oder als Intrusion Detection System (IDS; Angriffserkennungssystem). Alternativ oder zusätzlich hierzu könnten Netzwerkaufgaben wie z.B. schnelle Zugriffs-Tabellen (look-up tables - insbesondere ausgebildet als Content Addressable Memories - CAM), die Verarbeitung regulärer Ausdrücke (regular expressions, RegExp) und Zeichenübereinstimmungsverarbeitung sowie eine TCP-Paket-Verarbeitung durch die Hardware-Beschleunigungseinrichtung 18 beschleunigt werden. Darüber hinaus ist der hier verfolgte Lösungsansatz auch auf Sicherheitsanwendungen anwendbar, wie zum Beispiel Verschlüsselungsprozessoren. Aufgrund der möglichen unterschiedlichen Anwendungen wird der hier verfolgte Ansatz genauer am Beispiel eines Sicherheitsgateways 40 erläutert, das den Datenfluss zwischen unterschiedlichen Sicherheitsebenen steuert.

Im Gegensatz zu üblichen Koprozessoren oder Hardware-Beschleunigern, die keine oder nur eine software-basierte Virtualisierung nutzen, wird hier insbesondere der Ansatz verfolgt, dass eine voll hardwareunterstützte IO-Virtualisierungs-Ebene vorgesehen wird. Der Einsatz einer solchen HardwareVirtualisierungsebene nutzt den Beschleuniger oder Koprozessor effizienter und erlaubt die gemeinsame Benutzung durch unterschiedliche getrennte virtuelle Maschinen oder Partitionen in einer sicheren Weise, indem insbesondere der Virtualisierungs-Oberbau so gering wie möglich gehalten wird.

Ein Vorteil der hier vorgeschlagenen Hardware-Lösung ist die Vereinfachung der Zeitplan-Betrachtungen in einem IMA-System. Integrierte Modulare Avionik - *Integrated ModularAvionics,* kurz *IMA -* bezeichnet eine flugtaugliche, modulare Rechner-Elektronikeinheit aus standardisierten Komponenten und Schnittstellen in Hard- und Software zur Kommunikation zwischen den verschiedenen Systemen in einem Luftfahrzeug. In solchen IMA-Systemen ist das Timing der Anwendung sehr streng und genau, und die maximale Ausführungsdauer ist durch einen festen Zeitplan vorbestimmt. Bei Verwendung eines Software-Gateways muss der System-Integrator in Betracht ziehen, dass die korrekte Gateway-Instanz eingeplant wird, wenn eine Kommunikation zwischen zwei Domains auftritt oder auftreten kann und Prozessorzyklen des Prozessorkerns nutzt.

Im Falle einer Einzelkernarchitektur bedeutet dies, dass die Anwendung größere Ausführungszyklen hat, also seltener ausgeführt wird, was zu Sicherheitsbedenken führen kann, wie z.B. bei der Behandlung von Störungsmeldungen, die innerhalb einer bestimmten kurzen Zeitdauer verarbeitet werden müssen.

Bei Mehrkernarchitekturen könnte ein zugeordneter Kern zur Verarbeitung des Software-Gateways eingesetzt werden. Dies führt jedoch zur "Verschwendung" eines Kerns nur für die Gateway-Funktionalität. Darüber hinaus würde dieser Kern eine große Zeit im Wartezustand oder Standby verharren, wenn keine Kommunikation zwischen Domains auftritt.

Durch Verwendung des hier verfolgten neuen Hardware-Gateways können die Anstrengungen für diese komplexen Zeitplanbetrachtungen beträchtlich reduziert werden. Das Hardware-Gateway braucht keine geplante Ausführungszeit (Zeitschlitz) auf einem der Systemkerne and kann parallel zu den Anwendungen während der Kommunikation laufen. Dies bedeutet zum einen, dass die Daten an der empfangenden Anwendung bereit stehen, wenn sie benötigt werden, und zum anderen, dass der System-Integrator nur die Information über die maximal mögliche Laufzeit eines Pakets durch das Gateway hindurch benötigt, um einen sicheren Zeitplan aufzustellen. Letzteres ist vorteilhaft, um einen Zeitschlitz zwischen zwei Domains vorzusehen, wenn die abgebende Domain am Ende Daten sendet, die durch die empfangende Domain am Beginn benötigt werden.

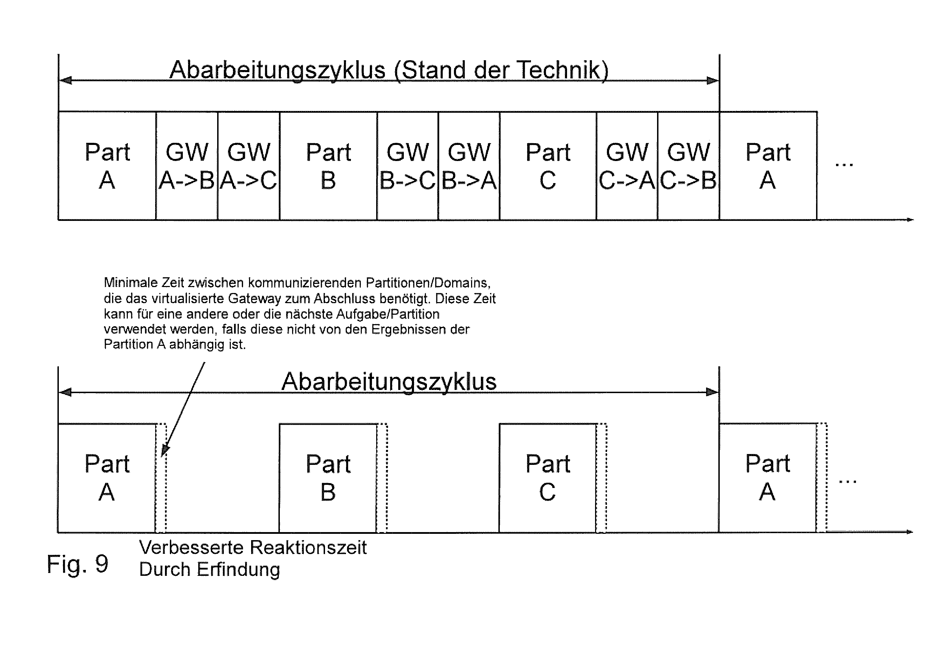

Ein Hardware-Gateway kann allerdings ein Scheduling-Verfahren benötigen, nach dem priorisiert wird, wenn mehrere abzuarbeitende Datenpakete in dem Eingangspufferspeicher 20 vorhanden sind. Das Steuerungssignal 30 wird dann von einem Verfahren gesteuert, welches die Abarbeitung der Puffer 26 nach bestimmten Regeln veranlasst. Als solche Verfahren sind beispielsweise First-Come-First-Serve, Deadline Scheduler oder Round Robin bekannt. Alternativ können auch architekturspezifische Verfahren angewendet werden. So kann es vorteilhaft sein, Puffer 26 von virtuellen Maschinen 14 vorrangig abzuarbeiten, welche in dem Ausführungszyklus der Verarbeitungseinrichtung als nächstes aktiviert werden. Beispielhaft für einen Prozessorkern in Fig. 9 dargestellt gibt es meist einen statischen Abarbeitungszyklus der virtuellen Maschinen/Partitionen 14. Die Beschleunigungseinrichtung 18 könnte also die Abarbeitung von Puffern 26 bevorzugen, die im nächsten Abarbeitungsschritt benötigt werden. Das Steuerungssignal 30 würde in diesem Fall entsprechend dieser Regeln erzeugt werden.

Für weitere Einzelheiten zu Virtualisierungstechniken und Gateways wird insbesondere auf folgende Literaturstellen hingewiesen, die durch Bezugnahme als Teil der hiesigen Offenbarung mit inkorporiert sind:
[1] Bsi.de. (2012). Überblick über die Konzeption von Sicherheitsgateways. Retrieved from https://www.bsi.bund.de/ContentBSI/Themen/Internet_Sicherheit/Sicherheitsk omponenten/Sicherheitsgateway/konzsichgateway.html
[2] Kroll, J. (2012). Das Who ' s Who der Virtualisierungstechniken. Retrieved from http://www.elektroniknet.de/embedded/technik-know-how/betriebssysteme/article/26197/0/Das_Whos_Who_der_Virtualisierungste chniken/
[3] Trendmicro.com. (2009). Virtualizing Email Gateway Security. Retrieved from http://us.trendmicro.com/imperia/md/content/us/pdf/products/enterprise/intersc anmessagingsecuritysuite/wp04_vmware_090803us.pdf
[4] Checkpoint.com. (2012). Check Point Software Blade Architecture. Retrieved from http://www.checkpoint.com/products/softwareblades/architecture/index.html
[5] Astaro.com. (2012). Astaro Security Gateway Software Appliance. Retrieved from http://www.astaro.com/products/astaro-security-gateway-softwareappliance
[6] Checkpoint.com. (2012). Security Gateway Virtual Edition. Retrieved from http://www.checkpoint.com/products/security-gateway-virtual-edition/index.html
[7] Juniper.com. (2012). Virtual Gateway der vGW-Serie - Netzwerksicherheit - Juniper. Retrieved from http://www.juniper.net/de/de/productsservices/software/security/vgw-series/
[8] Asatro.com. (2012). Astaro Security Gateway Virtual Appliance for VMware. Retrieved from http://www.astaro.com/products/astaro-security-gatewayvirtual-appliance-for-vmware
[9] Cisco.com. (2012). Cisco Virtual Security Gateway for Cisco Nexus 1000V Series Switches Data Sheet. Retrieved from http://www.cisco.com/en/US/prod/collateral/modules/ps2706/ps11208/data_sh eet_c78-618244.html
[10] Checkpoint.com. (2012). Check Point Security Appliances. Retrieved from http://www.checkpoint.com/products/appliances/index.html
[11] Juniper.com. (2012). Netzwerksicherheitsprodukte - Zugriffskontrolle für Netzwerksicherheit - Juniper. Retrieved from http://www.juniper.net/de/de/products-services/security/
[12] Astaro.com. (2012). Astaro Security Gateway Hardware Appliances. Retrieved from http://www.astaro.com/products/hardware-appliances
[13] Cisco.com. (2012). Cisco ASA 5500 Series Adaptive Security Appliances - Products & Services. Retrieved from http://www.cisco.com/en/US/products/ps6120/index.html
[14] Genua.de. (2012). GeNUA - Zweistufige Firewall GeNUA - Zweistufige Firewall. Retrieved from http://www.genua.de/produkte/genugate/index.html
[15] Genua.de. (2012). GeNUA - Rot-Schwarz-Gateway. Retrieved from Genua RSGate http://www.genua.de/produkte/rsgate/index.html
[16] Cassidian.com. (2012). Secure Exchange Gateway ( SEG ). Retrieved from http://www.cassidian.com/web/guest/1354
[17] Intel.com. (2008). Intel VMDq Technology. Retrieved from http://www.intel.com/content/www/us/en/virtualization/vmdq-technology-paper.html
[18] Intel.com. (2012). Virtual Machine Direct Connect ( VMDc ). Retrieved from http://www.intel.com/network/connectivity/solutions/vmdc.htm
[19] Intel.com. (2008). PCI-SIG Single Root I / O Virtualization ( SR-IOV ) Support in Intel ® Virtualization Technology for Connectivity Efficient Native Sharing of I / O Devices with Virtual Machines for enhancing I / O Performance I / O Virtualization Goals.
[20] Techtarget.com. (2012). -Virtualization-and-Converged-IO. Retrieved from http://searchnetworking.techtarget.com/tutorial/I-O-Virtualization-and-Converged-I-O-Understanding-the-basics
[21] Intel.com. (2011). Intel ® Virtualization Technology for Directed I / O (VT-d spec). Retrieved from http://download.intel.com/technology/computing/vptech/Intel(r)_VT_for_Direct _IO.pdf
[22] Committee, A. E. E. (2005). ARINC 811: Commercial Aircraft Information Security Concepts of Operation and Process Framework. Aeronautical Radio, Inc.

IO-Virtulisierung ist eine Technik, die bereits heutzutage für Netzwerkadapter eingesetzt wird, siehe [17][18][19][20]. Die funktionellen Ebenen (Virtualisierungsebenen genannt), welche die Hardware abstrahieren und virtuelle Geräte für virtuelle Maschinen und Partitionen anbietet, kann in reiner Software durch einen Hypervisor oder VMM wie Virtualbox, Vmware oder Xen oder in software mit Hardware-Unterstützung realisiert werden, siehe [17][18][19].

Eine Art von üblichen Sicherheitsgateways sind als Software-Firewalls realisiert, wie z.B. die Checkpoint Security Software Blades [4] oder Astaro Security Gateway Software Appliance [5]. Eine weitere übliche Form von Sicherheitsgateways sind als virtuelle Anwendungen implementiert, z.B. CheckPoint Security Gateway Virtual Edition [6], Juniper Virtual Gateway (vGW) [7], Astaro Security Gateway Virtual Appliance for VMware [8], Cisco Virtual Security Gateway (VSG) [9]. Der gebräuchslichste Typ von Sicherheitsgateway ist eine festgeschaltete Hardware-Box (oft auch Hardware Security Gateway genannt), wie z.B. CheckPoint Security Applicances [10], Juniper SRX/SSG_series [11], Astaro Security Gateway Hardware Appliances [12], Cisco Adaptive Security Appliances (e.g. Cisco ASA 5500 Series) [13], Genua GeNUGate/RSGate [14] [15], Cassidian SECCOM® Secure Exchange Gateway (SEG) [16].

Im Gegensatz zu den bekannten Lösungen wird bei dem hier vorgeschlagenen einzigartigen Ansatz die Idee der Hardware-Beschleunigung mit IO-Virtualisierung mit Hardwareunterstützung kombiniert und darüber hinaus die IO-Virtualisierung vollständig in Hardware als selbstvirtualisierender Hardware-Beschleuniger oder Koprozessor ausgeführt. Weiter wird in allen möglichen Anwendungsszenarien die Dienstgüte (Quality of Service, QoS) sichergestellt.

Ein Anwendungsgebiet von virtualisierten hardware-beschleunigten Sicherheitsgateways kann in einer Luftfahrt-Computer-Plattform liegen, wie z.B. einer IMA, die Anwendungen mit unterschiedlich kritischen Bedingungen verwaltet. Diese Anwendungen laufen in getrennten virtuellen Maschinen oder Partitionen. In diesem Fall ist ein Sicherheitsgateway zum Steuern der Kommunikation zwischen den virtuellen Maschinen auf der Plattform selbst und/oder zwischen wenigstens einer der virtuellen Maschinen und der Außenwelt ausgebildet.

Zur Betrachtung dieses Beispiels wird angenommen, dass die Computer-Plattform - unabhängig von einer Einkern- oder einer Mehrkern-Architektur - durch eine Zwischenebene (Abstraktionsebene, ein Beispiel für die Ressourcenverwaltungseinrichtung 12) zwischen den Softwareanwendungen und der Hardwareplattform abstrahiert ist, wobei die Zwischenebene auch für die Aufteilung/Trennung/Zuordnung der Ressourcen auf die Partitionen oder virtuellen Maschinen verantwortlich ist. Diese Abstraktionsebene kann durch ein Stück Software mit oder ohne Hardwarevirtualisierungsunterstützung (z.B. Intel VT-x und andere), beispielsweise durch ein Betriebsystem (OS), Virtual Machine Monitor VMM oder Hypervisor Hyp bereitgestellt sein. Funktionell macht es keinen Unterschied, ob der Software-Abschnitt als ein monolithischer Block oder als Mikrokern oder als Separation Kernel aufgebaut ist. Jedoch ist der am meisten bevorzugte Ansatz die Verwendung eines Separation Kernel (SK) mit Hardware-Virtualisierungsunterstützung - insbesondere, wenn höhere Zertifizierungs-Ebenen (wie z.B. Common Criteria EAL4 und höher) angestrebt werden.

Fig. 3 zeigt ein Rechnersystem 10 mit unterschiedlichen Partitionen oder Virtuellen Maschinen 14 in einer Partitionsebene 50, mit einer Steuerungsebene 52, die ein separierendes Betriebssystem mit einem Separation Kernel 60 und anderen Betriebssystemsdiensten 62 (other OS services) aufweist, aufgesetzt auf eine Hardware 64 in einer Hardwareebene 54.

Eine Möglichkeit zur Realisierung eines virtualisierten (hardware-beschleunigten) Sicherheitsgateways ist der Einsatz eines Koprozessors oder einer IO-Karte mit einer Hochgeschwindigkeits-Schnittstelle wie Quick Path Connect, Hypertransport, oder PCI express (PCIe) oder seriellem RapidIO (sRIO). Zustätzlich zu dieser Hochgeschwindigkeitsschnittstelle umfasst eine beispielhafte Architektur des hardware-beschleunigten (selbst-virtualisierenden) Gateways eine Abstraktionsebene (Virtualisierungs-Ebene) und die zu beschleunigende Funktion - in diesem Fall eine Beschleunigung des Sicherheitsgateways. Aufgrund des IO-Kartenansatzes können die Schnittstelle und die Virtualisierungsebene als festverschaltete digitale Logik (FPGA oder ASIC) implementiert werden, wohingegen die Beschleunigungsfunktionalität als festverschaltete Logik oder als Software of einem speziell angepassten Prozessor implementiert werden kann.

Eine Übersicht über einen solchen Aufbau mit den entsprechenden Funktionen ist in der Fig. 4 wiedergegeben. Eine System-Schnittstelle 46 (System interface) und eine E/A-Einrichtung (IO-Block) 44 zeigen die Hochgeschwindigkeitsschnittstelle. Weiter ist eine Co-Prozessor/Hardware-Erweiterungskarte 42 (Co-Processor/ hardware expansion card) dargestellt, auf der die Hardware-Virtualisierungseinrichtung 70 (HW-Virtualisierer, HW virtualiser) und das Sicherheitsgateway 40 (Security gateway) implementiert sind.

Das Detail der Hardware-Virtualisierungseinrichtung 70 zeigt die oben beschriebene Abstraktions- oder Virtualisierungebene, die im Einzelnen noch näher dargestellt ist.

Es sind unterschiedliche Partitionen 72, 74, 76 dargestellt, von denen eine erste und eine zweite Anwendungspartitionen 74, 76 (Application partition 1 und Application Partition 2) sind und von denen eine weitere als Verwaltungspartition 72 (Management partition) dient.

Das Sicherheitsgateway 40, das ein Beispiel für eine Bearbeitungseinrichtung 24 darstellt, enthält die Beschleunigerfunktionalität.

Die Virtualisierungsebene kann auch in einer Variante ausgeführt werden, bei der die Virtualisierungsebene die gesamte IO-Virtualisierungsfunktionalität in Hardware umfasst (self-virtualizing hardware/device).

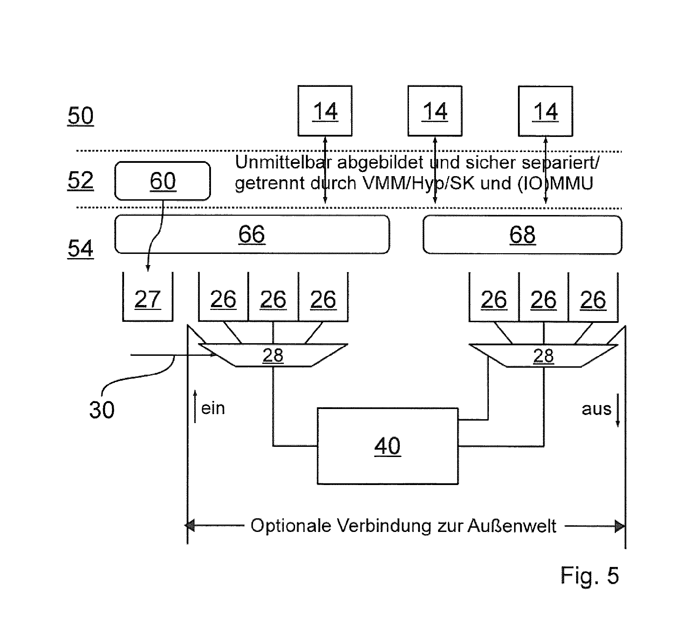

Eine Übersicht über eine IO-Kartenvariante des selbstvirtualisierenden hardwarebeschleunigten Sicherheitsgateways ist in Fig. 5 als ein Beispiel wiedergegeben. Fig. 5 zeigt eine schematische Darstellung einer Systemarchitektur mit Hardware/Software-Aufteilung (HW/SW partitioning).

DiePartitionsebene 50 stellt die Partitionen 14 dar, die die Funktionen der Vorrichtung, in diesem Fall des Sicherheitsgateways 40, nutzen. Die Funktionen sind als virtuelle Funktionen ausgebildet, die auf die physikalischen Funktionen der Vorrichtung abgebildet werden und dabei zur strikten Trennung unterschiedliche Dienstwarteschlangen, in diesem Fall Pufferspeichereinrichtungen 26, nutzen. Die Dienstwarteschlangen und das Steuerungssignal (Teil der Virtualisierungsebene) sind in Fig. 5 in der Hardwareebene 54 dargestellt. Die Details hiervon werden im Folgenden näher beschrieben.

### Übersicht über die Virtualisierungsebene:

Unabhängig von der verwendeten IO-Technologie wird beim selbstvirtualisierenden hardwarebeschleunigten Sicherheitsgateway 40 der Adressraum in der physikalischen Systemschnittstelle logisch in eine Verwaltungsschnittstelle und mehrere Partitionsschnittstellen aufgeteilt. Für eine sichere Trennung dieser Adressraumabschnitte sorgt eine Memory Management Unit (MMU) 66 der Prozessor-Plattform von dem Prozessor zu dem Sicherheitsgateway 40. Die entgegengesetzte Richtung von dem Sicherheitsgateway 40 zu dem Prozessor oder dem Systemspeicher wird durch eine IOMMU 68 (z.B. Intel VT-d [21], AMD IOMMU, Freescale PAMU, PCI-SIG ATS) gesichert, um eine sichere und effiziente Datenübertragung unter Verwendung von Direct Memory Access (DMA) zu schaffen. Die individuelle Schnittstelle für eine individuelle virtuelle Maschine wird direkt auf die virtuelle Maschine abgebildet und dieser zugeordnet, so dass IO-Operationen ohne Interaktion mit dem Separation Kernel ausgeführt werden können. Eine Verwaltungsschnittstelle mit einer Verwaltungsspeichereinrichtung 27 ist nur durch den Separation Kernel 60 zugänglich. Eine Interaktion des Separation Kernel 60 wird nur benötigt, um die logische Trennung/Abbildung einzurichten und die Steuerungseigenschaften mittels der Verwaltungsschnittstelle einzustellen.

Das Routen, Schalten oder Verteilen von Datenpaketen, das sonst üblicherweise in Software ausgeführt wird, wird hier vollständig in dedizierter Hardware ausgeführt, um die beste Leistung zu erhalten.

Die Abfolge der Verarbeitung der Partitionsschnittstellen wird mittels des Steuerungssignals 30durch Hardware gesteuert und ist mittels der Verwaltungsschnittstelle einstellbar. Der Bedienprozess der unterschiedlichen Partition-Schnittstellen nutzt eine Art Hardware-Kontext-Schalter oder Umschalter 28 des Sicherheitsgateways und wird in einer Art Zeit-Multiplexverfahren durchgeführt. Der Zeitablaufplan des Multiplexverfahrens kann vorbestimmt sein oder auch anpassbar (adaptiv) sein. Dies erlaubt eine Optimierung des Zeitablaufs und sorgt für eine hohe Dienstgüte (Quality of Service- QoS).

### Übersicht über die Sicherheitsgatewayfunktionalität:

In einem bevorzugten Ausführungsbeispiel ist das Sicherheitsgateway nur unidirektional kontrollierend zwischen zwei Partitionen und entscheidet, ob ein Paket weitergeleitet werden darf oder nicht. Das Schalten oder Routen (Switching/Routing) wird durch Zusammenwirken der Steuerungseinheit der Virtualisierungsebene und der Entscheidung des Sicherheitsgateways durchgeführt.

Übersicht über die Beschreibung eines konkreten detaillierten Ausführungsbeispiels:
Die folgenden drei Abschnitte beschreiben ein detailliertes Systemdesign einer individuellen Ausgestaltung eines virtualisierten hardwarebeschleunigten Sicherheitsgateways als ein detailliertes Ausführungsbeispiel der Erfindung.

Das System basiert auf einem Freescale P4080 Multicore-Prozessorsystem, das über eine PCIe-Schnittstelle an eine FPGA-IO-Karte mit einer PCIe SR-IOV-Schnittstelle angeschlossen wird. Ein Pike-OS-Betriebssystem von Sysgo wird als Separation Kernel- und Systemsoftware 60, 62 genutzt. Die SicherheitsgatewayFunktionalität kann in der FPGA-Karte in festverschalteter Hardware oder in Software eines speziell angepassten Allzweckprozessors implementiert sein.

### Softwareebene:

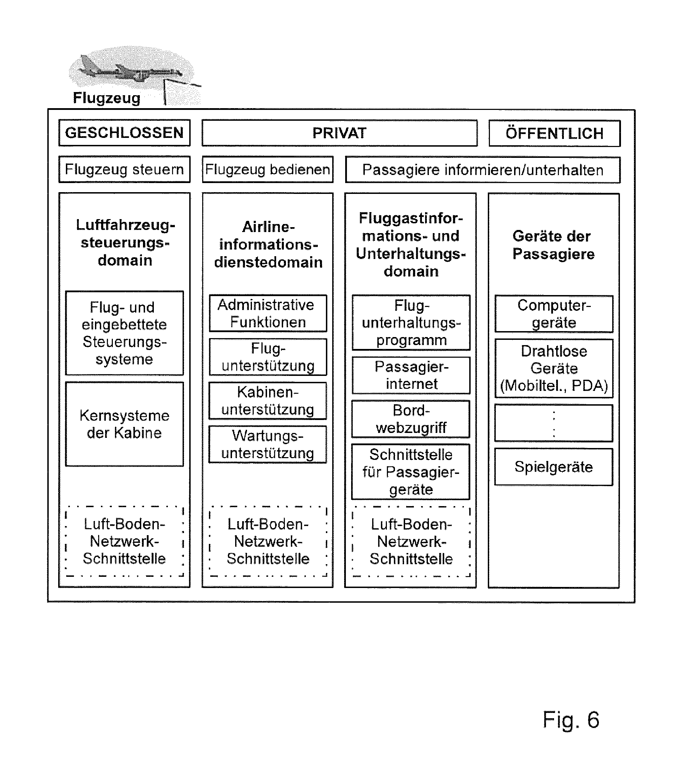

In heutigen und zukünftigen Flugzeug-Rechnersystem-Architekturen handhabt die Avionik (Bordelektronik/Luftfahrtelektronik) Daten, die hinsichtlich Sicherheit und Verfügbarkeit durch unterschiedliche Kritizitätsebenen klassifiziert sind. Auf solch eine Avionik-Architektur soll bei diesem Anwendungsszenario der Hauptaugenmerk gelegt werden. Ein abstraktes Modell zur Gruppierung und Klassifizierung von Datenobjekten hinsichtlich Sicherheit umfasst Sicherheits-Domains, wobei jede Domain Daten aus der gleichen Gruppe verarbeitet. In heutigen Luftfahrt-Architekturen gibt es gewöhnlich drei solcher Domains (abgeschlossen, privat und öffentlich). Dies ist schematisch mit mehr Einzelheiten in Fig. 6 dargestellt (aus [22]).

In dem hier betrachteten Beispiel will ein Systementwickler die In-Flight-Unterhaltungssystemsoftware (privat) und die Verwaltungssoftware für den Endpunkt eines WLAN (drahtloses Netzwerk - öffentlich) in eine IMA-Vorrichtung integrieren. Der WLAN-Endpunkt wird benötigt, um eigene Geräte der Passagiere, wie z.B. Mobiltelefone oder Tablet-PCs, an das Flugzeugsystem anzukoppeln, um z.B. Filme auf dem eigenen Gerät anzusehen oder Dienste zu steuern wie Benachrichtigungen des Kabinenpersonals oder Leselampensteuerungen.

Um die Möglichkeit zu schaffen, passagiersitzbezogene Kabinendienste auf dem extern verbundenen System anzusehen bzw. zu steuern, benötigen die beiden Systeme innerhalb der IMA-Vorrichtung einen bidirektionalen Kommunikationskanal. Jedoch sollte der Passagier keine anderen Kabinendienste steuern können, wie z.B. Sicherheitsankündigungen oder die Sitzoptionen eines anderen Passagiers. Weiter sollten Passagiergeräte nur überwachten Zugriff haben, um so Dienstverweigerungsangriffe (denial of service, DoS) oder vergleichbare gewollte oder ungewollte Störungen zu vermeiden, welche die Nutzbarkeit oder Verfügbarkeit der Dienste stören könnten.

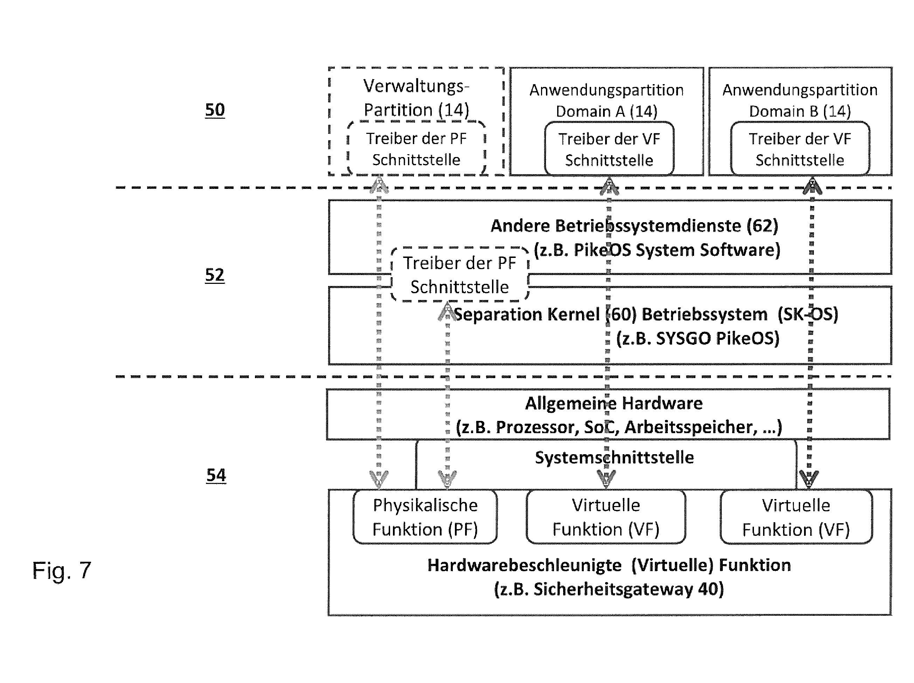

Fig. 7 zeigt eine mögliche Lösung für das zuvor beschriebene IMA-System. Domain A beherbergt oder hostet das In-Flight-Unterhaltungssystem einschließlich der Passagiergeräteschnittstelle (private Domain), während Domain B die WLAN-Verwaltung (öffentliche Domain) beherbergt oder hostet. Die Einkapselung zwischen diesen Domains wird durch Partitionen in Kraft gesetzt, die durch den darunter liegenden Separation Kernel 60, hier das PikeOS von Sysgo, vorgesehen werden. Der benötigte Kommunikationskanal zwischen den beiden Domains wird durch das selbstvirtualisierte Hardwaregateway, das in Fig. 7 unten gezeigt ist, geschaffen.

In Fig. 7 ist weiter eine optionale hoch-priorisierte Verwaltungspartition angedeutet. Das optionale Vorsehen oder Weglassen dieser Verwaltungspartition hängt z.B. davon ab, ob der Verwaltungstreiber für das Hardwaregateway (physikalische Funktion) in dessen eigenem Adressraum eingekapselt werden soll oder innerhalb der Betriebssystems-Software 60 (hier PikeOS) integriert werden kann. Die direkte Integration in PikeOS kann durch eine OS-spezifische Technologie namens "Systemerweiterung" (system extension) erreicht werden.

Bei einem Startvorgang des Systems (Start Up) initialisiert die Betriebssoftware zunächst ihre eigenen OS-Dienste und danach die unterschiedlich konfigurierten Partitionen 14. Danach muss entweder die Betriebssoftware oder die Verwaltungspartition das Hardwaregateway unter Einsatz des Treibers für die physikalische Funktion konfigurieren. Diese Konfiguration weist die Anzahl von virtuellen Endpunkten/Geräten (virtuelle Funktionen) und die Regelsätze auf, die die erlaubte Kommunikation zwischen den beiden Endpunkten definieren. Das Hardwaregateway wird unidirektional implementiert. Daher müssen für eine bidirektionale Kommunikation in dem Beispiel vier Endpunkte/virtuelle Funktionen (VF) - zwei Eingänge und zwei Ausgänge - konfiguriert werden. Die Adressen der neu erzeugten virtuellen Geräte werden direkt in den Adressräumen der zugeordneten Partitionen abgebildet. Der Separation Kernel ist zuständig für die Durchsetzung, z.B. durch Konfiguration der Systeme von MMUs 66 und IOMMUs 68. Bei diesem Beispiel ist die Konfiguration nach vervollständigtem Startvorgang des Systems statisch; in anderen Ausführungen kann auch eine dynamische Rekonfiguration durch den physikalischen Funktionstreiber ermöglicht sein.

Nachdem das System initialisiert worden ist, können das In-Flight-Unterhaltungssystem und das WLAN-Verwaltungssystem ihren Betrieb aufnehmen. Wenn das WLAN-Verwaltungssystem Kommunikation mit dem In-Flight-Unterhaltungssystem benötigt, schreibt es die Pakete unter Verwendung des Treibers für die VF in die vorgesehene virtuelle Funktion des Hardwaregateways ohne Interaktion der dazwischen liegenden Ebenen. Der Schreibvorgang kann direkt oder unter Verwendung von DMA-Transfers geschützt durch die MMU durchgeführt werden. Nachdem dieser Vorgang vollendet worden ist, kann die Anwendung sofort ihre anstehenden Verarbeitungsvorgänge weiterführen.

Der ankommende Datentransfer zu einer Domain/Anwendung wird wiederum unter Verwendung von DMA-Transfer umgesetzt. Der Systemspeicher wird durch die IOMMU (z.B. in diesem Fall: PAMU) gegen unerlaubten Zugriff geschützt. Die Benachrichtigung, dass neue Daten erhältlich sind, kann entweder durch eine Unterbrechungsanforderung (Interrupt) an die Anwendung (riskant bezüglich Verfügbarkeitserfordernisse) oder durch Abfrage (polling) eines spezifischen Speicherbereichs des Anwendungsadressraumes erfolgen.

### Hardwarevirtualisierungsebene:

Bei diesem individuellen Beispiel eines selbstvirtualisierenden hardwarebeschleunigten Sicherheitsgateways wird PCIe SR-IOV, siehe [19], als IO-Technologie eingesetzt. Darüber hinaus wird die SR-IOV PCIe-Endpunkt-Schnittstelle logisch in eine Verwaltungsschnittstelle und mehrere Partitions-Schnittstellen aufgeteilt. Diese Schnittstellen werden physikalische Funktion (PF) bzw. virtuelle Funktion (VF) genannt, siehe [19].

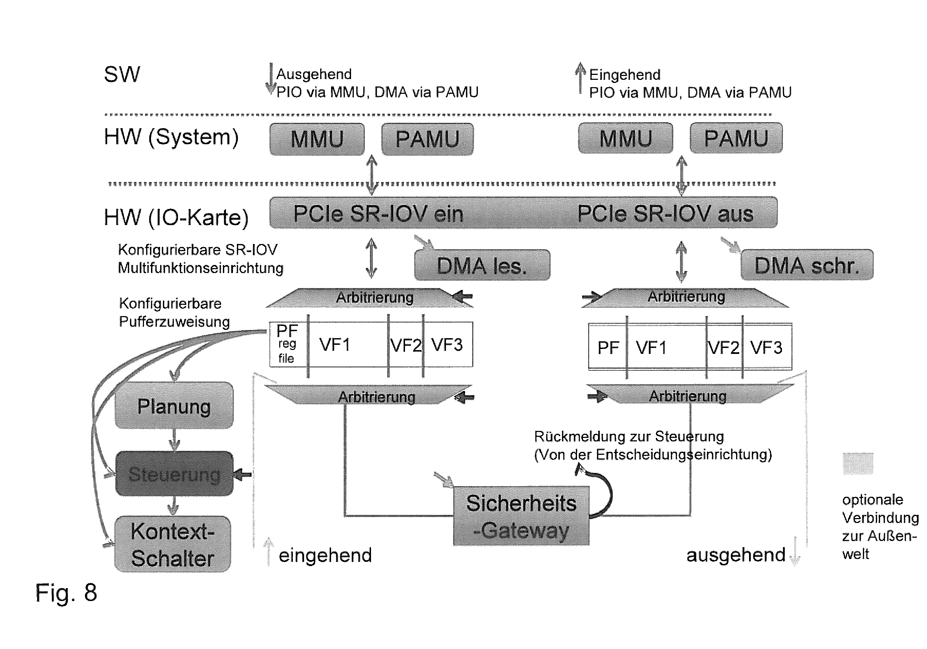

Eine sichere Trennung der PF und mehrerer VF ist in Richtung von dem Prozessor zu dem Sicherheitsgateways durch die MMU der Freescale-P4080-Prozessing-Plattform vorgesehen, siehe hierzu Fig. 8.

Die entgegengesetzte Richtung von dem Sicherheitsgateway zu dem Prozessor oder dem Systemspeicher wird durch eine Freescale-PAMU gesichert, um für sicheren und effizienten Datentransfer unter Verwendung von DMA zu sorgen, siehe Fig. 8. Die PAMU ist ebenfalls Teil der P4080-Rechner-Plattform. Die individuelle VF wird direkt auf die jeweilige individuelle Partition abgebildet und dieser zugeordnet, so dass IO-Vorgänge ohne Zwischenaktion der PikeOS-Software durchgeführt werden können. Auf die PF kann allein durch PikeOS oder die individuelle Verwaltungspartition zugegriffen werden. Eine Interaktion des PikeOS ist nur zum Aufbau der logischen Trennung/des Abbildens (mapping) und der Einstell- oder Einricht-Steuerfunktionen über die PF von Nöten. Ein solcher Konfigurationsprozess ist nur bei dem System-Startvorgang während des Bootens des PikeOS nötig.

Ein eigener Speicher wird verwendet, um die Datenpakete jeder VF zu puffern. Diese Pufferspeicher müssen nicht die gleiche Größe haben, z.B. benötigt eine kommunikationsintensive Anwendung - wie das Unterhaltungssystem - mehr Pufferspeicherplatz als eine kommunikationsarme Anwendung. Um so flexibel wie möglich zu sein, ist die Anzahl von VFen der PCIe SR-IOV-Schnittstelle und die diesen VFen zugeordneten Pufferspeichergröße konfigurierbar, siehe hierzu Fig. 9.

Die Abfolge der Verarbeitung der Partitionschnittstellen wird durch Hardware gesteuert und wird über die PF-Schnittstelle einmalig beim Systemstartvorgang eingerichtet. Der Zeitablauf-Prozess (siehe Fig. 9) der VFen verwendet eine Art Hardware-Kontext-Schalter (siehe Fig. 8) des Sicherheitsgateways und wird in einer Art Zeitmultiplexverfahren durchgeführt. Solch ein Kontext-Schalter benötigt einen Wechsel der Ausgangs-VF (gesehen von der Anwendung aus) und einen Regelsatz für die zugeordnete Domain. Der Zeitplan hat auch Einfluss auf die Eigenschaften der DMA-Leseeinheit und der DMA-Schreibeinheit. Der ZeitablaufPlan des Zeitmultiplexverfahrens ist vordefiniert oder vorbestimmt. Der ungünstigste bei der Auslegung des gesamten Systems zu berücksichtigende Fall ist das Szenario, wenn die Partition A Daten am Ende ihres Zeitschlitzes sendet, welche Partition B am Beginn ihres Zeitschlitzes benötigt, und B unmittelbar auf A folgt. Daher ist es für den Systemintegrator wichtig, Kenntnis der größten möglichen Paketlatenz (Paketlaufzeit, Paketwartezeit) zu haben, d.h. insbesondere der Zeit, die vom Abgeben eines Pakets an das Gateway bis zum Erreichen seines Bestimmungsorts vergeht. Unterschiedliche Zeitplanungsverfahren können in dem Hardware-Virtualisierer implementiert werden. Einige Beispiele sind:
1. "Round Robin" (Rundlaufverfahren): Jede Partition bekommt die gleiche Zeit zum Verarbeiten von Daten. Zum Implementieren eines solchen Verfahrens schaltet die Zeitablauf-Steuerung in dem HW-Virtualisierer den Quellen-Pufferspeicher für die darunter liegenden Funktion/das Gateway nach einer vorbestimmten Anzahl von Zeiteinheiten von einem Ausgangs-Pufferspeicher 26 zu einem anderen.
2. Weighted Round Robin (gewichtetes Rundlaufverfahren): Das Round-Robin-Verfahren gemäß Ziffer 1 funktioniert gut, solange jede Partition annähernd die gleiche Menge an Daten verarbeitet. In realen Systemen ist dieses Verhalten sehr selten. Das Zeitplanungsverfahren gemäß Ziffer 2 wendet das Round Robin-Verfahren an, jedoch mit einer unterschiedlichen Gewichtung, d.h. jeder Partition können unterschiedliche (z.B. statisch zugeordnete) Prozesszeiten zugewiesen werden. So erhalten Partitionen mit hohem Kommunikationsbedarf mehr Prozesszeit als Anwendungen mit geringem Kommunikationsbedarf.
3. Dynamic Weighted Round Robin (dynamisch gewichtetes Rundlaufverfahren): Das Zeitablaufverfahren nach Ziffer 2 kann immer noch hohe Paketlatenzen haben, was einen großen Einfluss auf die systemweiten Zeitplanung haben kann. Der Ansatz gemäß Ziffer 3 verwendet die Anzahl der gesendeten Pakete und ihrer Pufferspeicher, um die derzeit aktiven Partitionen zu bestimmen. Danach erhöht die Zeitablaufsteuerung dynamisch die Zeitplan-Gewichtung für die aktiven Partitionen, um ihre Paketlatenz zu verringern. Dieser Ansatz kann verfeinert werden, wenn der Hypervisor zusätzlich Informationen über die folgenden Partition(en) liefert. So könnte die HW-Zeitsteuerung Pakete für diese Partition bevorzugt verarbeiten.

Diese Ansätze erlauben die Zuordnung bestimmter Bandbreiten und sorgen für die Dienstgüte für bestimmte VFen. Jedoch sollten alle Ansätze so implementiert werden, dass die Dienstgüteneinstellungen eingehalten und die Verfügbarkeit der Partitionen nicht beeinträchtigt wird, d.h. keine Partition sollte "verhungern".

Verglichen mit Lösungen nach dem Stand der Technik erlaubt die hier vorgeschlagene Lösung viel mehr Zeit auf dem Host-Computer für Anwendungsaktivitäten. Der oft benötigte Überhang für Gatewayfunktionen wird entfernt. Fig. 9 zeigt den Ausführungsablauf von statisch definierten Ausführungs-Zeitschlitzen, wie sie bei Avionik-Anwendungen üblich sind, auf dem Host-Prozessor, wobei die Gatewayfunktion nach Ausführung einer Partition eingeplant ist. Das Entfernen des Überhangs bedeutet eine wesentliche Leistungsverbesserung, wie dies in dem unteren Teil von Fig. 9 veranschaulicht ist, wo die Gatewayfunktionalität in dem virtualisierten Gateway läuft.

Bei einer Ausführungsform kann der Zeitablaufplans des Hardwarevirtualisierers Vorteile aus dem Zeitablaufplan des Hostsystems ziehen, wenn Aktivitäten priorisiert werden, die als nächstes auf dem Hostsystem benötigt werden. In dem Beispiel von Fig. 9 würde der Hardwarevirtualisierer zunächst die Kommunikation zu der als nächsten laufenden Partition einplanen. D.h. wenn Partition A unter Verwendung der Gatewayfunktion kommuniziert, wird der Hardwarevirtualisierer zunächst Partition B bedienen, bevor er Partition C bedient.

Fig. 9 zeigt die Dauer der Ausführung der Partitionen auf dem Hostsystem.

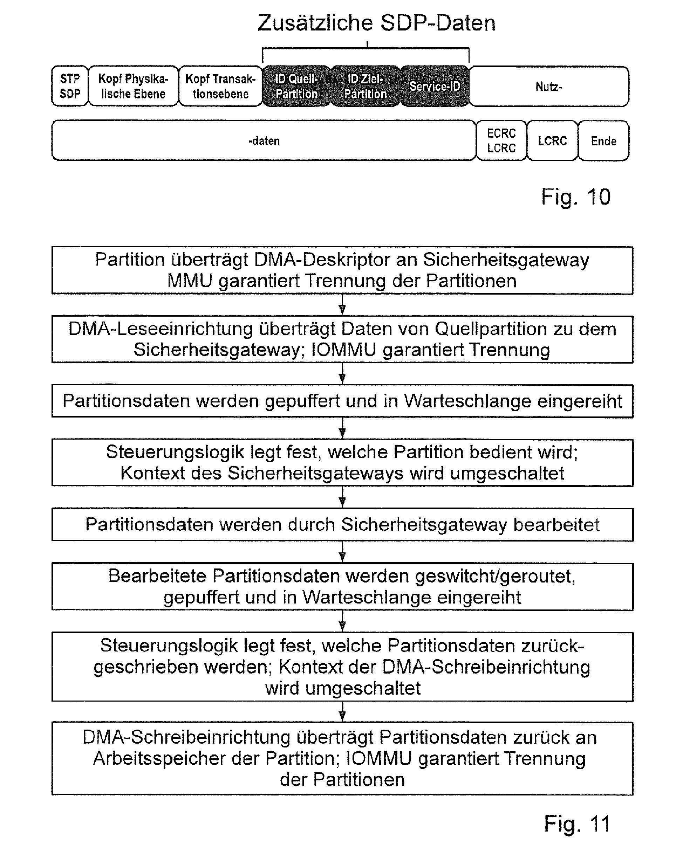

Das Routen/Switchen oder Verteilen der Datenpakete wird in diesem Fall vollständig in Hardware mit einem speziell vereinfachten Verteilungsprotokoll (SDP) ausgeführt, um die beste Leistung zu erzielen. Das SDP basiert auf dem PCIe-Protokoll und fügt diesem eine zusätzliche vierte Ebene hinzu. Diese vierte Ebene fügt lediglich einen leichten (lightweight) Header hinzu, der z.B. Quellen-Partitions-ID, Ziel-Partitions-ID, Dienst-ID enthält (siehe Fig. 10). Dies vereinfacht das Routen/Switchen und macht es effizienter (im Vergleich zu größeren oder umfangreicheren Protokollen wie z.B. TCP/IP).

Es wird keine zusätzliche Fehlerkorrektur benötigt, da diese in den darunterliegenden PCIe-Ebenen gehandhabt wird. Wie bereits oben erwähnt, ist das Sicherheitsgateway nur unidirektional und entscheidet, ob ein Paket weitergeleitet werden darf oder nicht, siehe Fig. 8. Das Switchen/Routen wird in Zusammenarbeit zwischen der Steuereinheit und der Entscheidung des Sicherheitsgateways durchgeführt.

Es gibt unterschiedliche Möglichkeiten, Daten zu übertragen. Wenn die Datenmenge nur klein ist, kann programmierte IO (PIO) unter Verwendung der CPU akzeptabel sein. Jedoch ist in den meisten Fällen eine Verwendung von DMA zur Entlastung der CPU erwünscht. Ein Beispiel für einen Datenfluss unter Verwendung von DMA für beide Richtungen einer Übertragung von Partition 1 (VF1) zu Partition 2 (VF2) ist - als spezielles Ausführungsbeispiel für den allgemeineren Ablauf von Fig. 2 - in Fig. 11 dargestellt. Das Flussdiagramm von Fig. 11 ist mit der entsprechenden Beschriftung selbsterklärend.

Als erstes sendet die Partition 1 den DMA-Deskriptor via PIO zu dem DMA-Controller - um effizienter zu sein, könnte die Partition aber auch die Übertragung mehrerer DMA-Deskriptoren via DMA zu der IO-Karte auslösen, dies wird DMA-Chaining genannt. Dann überträgt die DMA-Leseeinheit die gewünschten Daten von Partition 1 zu dem Pufferspeicher von VF1. Die PAMU überprüft, ob der Zugriff erlaubt ist und verhindert den Zugriff wenn nötig. Nachdem die Daten sich in die Warteschlange eingereiht haben (queued) entscheidet die Zeitsteuerung, wann diese Daten bedient werden. Wenn das Bedienen beginnt, wird der Kontext des Sicherheitsgateways umgeschaltet (d.h. der Pointer wird auf den zugehörigen Regelsatz geschaltet). Danach werden die Partitionsdaten durch das Sicherheitsgateway verarbeitet. Wenn das Sicherheitsgateway entscheidet, dass die Daten nicht weitergeleitet werden dürfen, werden die Daten verworfen. Wenn die Daten weitergeleitet werden dürfen, gibt die Entscheidungseinheit des Sicherheitsgateways eine Rückmeldung zu dem HW-Virtualisierer. Die Steuereinheit des Hardwarevirtualisierers führt das Switchen/Routen durch und puffert die Daten. Bei diesem Beispiel werden die Daten als gültig betrachtet und somit in dem VF2-Pufferspeicher abgelegt.

Es wird wiederum arbitriert, wenn die VF2-Daten zurückgeschrieben werden. In diesem Fall konfiguriert die Steuereinheit die DMA-Schreibeinheit (Kontext-Schalter), und die Daten werden in den Speicher der Partition 2 übertragen. Die PAMU überprüft, ob der Zugriff erlaubt wird und verhindert den Zugriff wenn nötig. Die Partition 2 wird benachrichtigt, dass Daten verfügbar sind.

Um die Leistung zu erhöhen, können einzelne Schritte parallel durchgeführt werden - z.B. DMA-Lesen, Beschleunigungsfunktion und DMA-Schreiben.

### Sicherheitsgatewayfunktionalität:

Um optional eine Verschlüsselung im Falle eines sicheren Gateways zu unterstützen können, wie in Fig. 12 dargestellt, optional zusätzlich ein Verschlüsselungsmodul, ein Entschlüsselungsmodul und ein Verschlüsselungsschlüsselspeicher oder sicherer Schlüsselspeicher vorgesehen sein.

Das Sicherheitsgateway empfängt Datenpakete von dem Beurteilungsmechanismus des HW-Virtualisierers. Die Hauptfunktion beginnt mit dem Klassifikationsmodul, in dem Datenpakete klassifiziert werden, z.B. hinsichtlich Protokoll, Quelle, Ziel, Diensttyp und Inhalt. Danach entscheidet die Weiterleitungs-/Verwerfungseinheit ob die Datenpakete im Hinblick auf den Regelsatz passieren dürfen. Danach werden gewährte Datenpakete wieder zu dem HW-Virtualisierer zur weiteren Verarbeitung gesendet, um dann die IO-Karte zu verlassen.

### Zusätzliches Ausführungsbeispiel: Virtualisierter Koprozessor zur Bildverarbeitung (z.B. Echtzeit-Oblekterfassung mit Korrelation):

Außer dem virtualisierten hardwarebeschleunigten Sicherheitsgateway gibt es noch weitere Anwendungen, die auf dem in den Fig. 1 bis 5, 8 dargestellten System beruhen. Virtualisierte Koprozessoren oder Beschleuniger für Bildverarbeitung können auch von dem bereits beschriebenen Virtualisierungsebenenkonzept profitieren. Ein Beispiel davon ist ein virtualisierter Koprozessor für Echtzeit-Objekt-Erkennung, siehe Fig. 13. Als (beschleunigte) Funktion werden Bilder (image) durch Transformationen (z.B. FFT) oder dergleichen verarbeitet und mit Objekt-Vorlagen korreliert. Dabei können bei den Vorlagen unterschiedliche Richtungen und Skalierungen eingesetzt werden, um dann mit der Korrelation und passender Information eine Rückübertragung in den Bildraum durchzuführen.

Das Konzept erlaubt die sichere und effiziente gemeinsame Nutzung eines derartigen Echtzeit-Objekt-Erfassungs-Koprozessors oder Beschleunigers zur Objekterfassung durch mehrere Partitionen oder virtuelle Maschinen mit gemischten Kritizitäten, die auf der gleichen Rechnerplattform laufen.

### Zusätzliche Beispielanwendung : Anpassbare IO-Schnittstelle, die von mehreren IO-Modulen genutzt wird:

Ein anderes Anwendungsgebiet zur Anwendung einer hardwareunterstützten Virtualisierungsebene, wie sie in Fig. 8 beschrieben ist, ist eine adaptierbare IO-Schnittstelle, die die gemeinsame Nutzung mehrerer IO-Module ermöglicht, wie dies in Fig. 14 dargestellt ist.

Die anpassbare Schnittstelle bietet eine PCIe SR-IOV-basierte Schnittstelle für ein Rechnersystem mit einer konfigurierbaren Anzahl von virtuellen Funktionen (VF). Die Größe der Pufferspeicher jeder VF ist ebenfalls konfigurierbar und zwar in Übereinstimmung mit dem geschätzten Kommunikationsumfang oder dem geschätzten Kommunikationsbandbreitenbedarf der VF. Zusätzlich sind die Abbildungen zwischen den VFen und den konfigurierbaren IO-Modulen anpassbar, um die Nutzung der Bandbreite zu optimieren. Die IO-Module sind konfigurierbare Platzhalter, die einen individuellen Standard der Anforderungen des Systems beinhalten können.

Es ist auch denkbar, dass die IO-Module während des Betriebs oder während der Laufzeit abhängig von den aktuellen Erfordernissen dynamisch von einem IO-Standard in einen anderen rekonfiguriert werden können.

Nimmt man alle diese Merkmale zusammen, ist eine hoch-konfigurierbares, an die jeweiligen Nutzerbedürfnisse anpassbare Schnittstelle erreichbar, welche die sichere und effiziente gemeinsame Nutzung mehrerer unterschiedlicher IO-Standards ermöglicht.

### Bezugszeichenliste

- 10: Rechnersystem
- 12: Ressourcenverwaltungseinrichtung
- 14: virtuelle Maschine (VM)
- 16: Weiterleitungseinrichtung
- 18: Beschleunigungseinrichtung
- 20: Eingangspufferspeicher
- 22: Ausgangspufferspeicher
- 24: Bearbeitungseinrichtung
- 26: Pufferspeichereinrichtung
- 27: Verwaltungsspeichereinrichtung
- 28: Umschalter
- 30: Steuerungssignal
- 32: Kommunikationseinrichtung
- 40: Sicherheitsgateway
- 42: Hardware-Erweiterungskarte
- 44: E/A-Einrichtung (IO block)
- 46: Systemschnittstelle
- 50: Partitionsebene (Virtuelle Maschinen)
- 52: Steuerungsebene
- 54: Hardwareeebene
- 60: Separation Kernel
- 62: Sonstige Betriebssystemdienste
- 64: Hardware
- 66: MMU
- 68: IOMMU
- 70: Hardware-Virtualisierungseinrichtung
- 72, 74, 76: Partition

## Patentansprüche

1. Rechnersystem (10) mit einer Ressourcenverwaltungseinrichtung (12) zur Separierung einer Mehrzahl von virtuellen Maschinen (14), umfassend:
eine Beschleunigungseinrichtung (18), die einen Eingangspufferspeicher (20), einen Ausgangspufferspeicher (22) und eine Bearbeitungseinrichtung (24) aufweist.

2. Rechnersystem gemäß Anspruch 1, **dadurch gekennzeichnet, dass** der Ein-gangspufferspeicher (20) und der Ausgangspufferspeicher (22) jeweils Pufferspeicher (26) aufweisen, die jeweils einer virtuellen Maschine (14) zugeordnet sind, wobei durch die Ressourcenverwaltungseinrichtung (12) ein Weiterleitungsbereich (16) gebildet wird, welcher einen Zugang der virtuellen Maschine (14) zu dem ihr zugeordneten Pufferspeicher (26) erlaubt.

3. Rechnersystem nach Anspruch 2, **dadurch gekennzeichnet, dass** die Beschleunigungseinrichtung (18) mittels eines Steuerungssignals (30) steuerbar ist, das von einem Umschalter (28) des Eingangspufferspeichers (20) auswertbar ist, wobei der Umschalter (28) jeweils zur Auswahl eines der Pufferspeichers (26) zur Verbindung mit der Bearbeitungseinrichtung (24) ausgebildet ist.

4. Rechnersystem nach Anspruch 2 oder 3, **dadurch gekennzeichnet, dass** der Ausgangspufferspeicher (22) einen Umschalter (28) aufweist, der von der Bearbei-tungseinrichtung (24) mittels eines Steuerungssignals (30) zur Verbindung eines der Pufferspeicher (26) mit der Bearbeitungseinrichtung (24) steuerbar ist.

5. Rechnersystem nach einem der voranstehenden Ansprüche, **dadurch gekennzeichnet, dass** die Bearbeitungseinrichtung (24) zur Überwachung und/oder Filterung und/oder Steuerung von Datenkommunikation zwischen den virtuellen Maschinen (14) und/oder mit einer externen Kommunikationseinrichtung (32) aus-gebildet ist.

6. Rechnersystem nach einem voranstehenden Ansprüche, **dadurch gekennzeichnet, dass** die Bearbeitungseinrichtung (24) zur Verarbeitung von Bilddaten ausgebildet ist.

7. Rechnersystem nach einem der voranstehenden Ansprüche, **dadurch gekennzeichnet, dass** die Bearbeitungseinrichtung eine Mehrzahl von IO-Modulen aufweist, die adaptiv teilbar ausgestaltet sind.

8. Luftfahrzeug mit einem Rechnersystem (10) nach einem der voranstehenden Ansprüche.

9. Beschleunigungseinrichtung (18) für ein Rechnersystem (10) nach einem der Ansprüche 1 bis 6, ausgebildet als selbst-virtualisierender oder virtualisierter Hard-ware-Beschleuniger oder selbst-virtualisierender oder virtualisierter Koprozessor.

10. Verfahren zum Betreiben eines Rechnersystems (10) zum Erhalt einer gewünschen System-Funktionalität mit:
Aufteilen der System-Funktionalität in mehrere Komponenten,
Trennen dieser Komponenten durch Aufteilen von Ressourcen in virtuelle Maschinen-Umgebungen (14) und
Einsetzen wenigstens einer gemeinsam nutzbaren Hardware-Beschleunigereinrichtung (18) oder eines Hardware-Koprozessors und gemeinsames Nutzen der Hardware-Beschleunigereinrichtung (18) oder des -Koprozessors durch die virtuellen Maschinen-Umgebungen (14).

11. Verfahren nach Anspruch 10, **dadurch gekennzeichnet, dass** die Hardware-beschleunigereinrichtung (18) mehrere Funktionsmodule aufweist, die zur Laufzeit dynamisch ausgetauscht werden, wobei Eingangspuffer dynamisch den Funktions-modulen zur Optimierung der Bandbreitenausnutzung zugeordnet werden.

12. Verfahren nach Anspruch 10 oder 11, **dadurch gekennzeichnet, dass** die Auswahl der durch die Hardwarebeschleunigungseinrichtung (18) zu bearbeitenden Daten in Abstimmung mit weiteren Komponenten des Rechnersystems (10) durchgeführt wird.
